Europäisches Patentamt

European Patent Office

Office européen des brevets

(11) Publication number: **0 394 751**
**A2**

## (12) EUROPEAN PATENT APPLICATION

(21) Application number: 90106895.7

(22) Date of filing: 10.04.90

(51) Int. Cl.5: **C08G 63/181, B65D 65/38, C08L 67/02, //(C08L67/02, 67:02)**

(30) Priority: 10.04.89 JP 90408/89
10.04.89 JP 90409/89
10.04.89 JP 90410/89
10.04.89 JP 90411/89
10.04.89 JP 90412/89
10.04.89 JP 90413/89

(43) Date of publication of application:
**31.10.90 Bulletin 90/44**

(84) Designated Contracting States:
**AT BE CH DE DK ES FR GB GR IT LI LU NL SE**

(71) Applicant: **MITSUI PETROCHEMICAL INDUSTRIES, LTD.**
**2-5, Kasumigaseki 3-chome Chiyoda-ku Tokyo 100(JP)**

(72) Inventor: **Wakumoto, Hiroshi**
**c/o Mitsui Petrochem. Ind., Ltd., 1-2 Waki 6-chome**
**Waki-cho, Kuga-gun, Yamaguchi(JP)**
Inventor: **Yatsu, Tadao**
**c/o Mitsui Petrochem. Ind., Ltd., 1-2 Waki 6-chome**
**Waki-cho, Kuga-gun, Yamaguchi(JP)**

(74) Representative: **Hansen, Bernd, Dr. Dipl.-Chem. et al**
**Hoffmann, Eitle & Partner Patent- und Rechtsanwälte Arabellastrasse 4 D-8000 München 81(DE)**

(54) Cocondensation polyester, process for manufacturing same and uses thereof.

(57) A cocondensation polyester according to the present invention is substantially linear and is composed of mononuclear aromatic dicarboxylic acid constituent units comprising isophthalic acid constituent units as their main ingredient, (b) binuclear aromatic dicarboxylic acid constituent units comprising 2,6-naphthalenedicarboxylic acid constituent units as their main ingredient, (c) diol constituent units comprising ethylene glycol constituent units as their main ingredient, and (d) polyfunctional constituent units derived from a polyfunctional compound having 3 or more carboxyl groups and/or hydroxyl groups in total and 3 to 15 carbon atoms, said polyester having an intrinsic viscosity [$\eta$] of 0.5 to 1.5 dl/g and a glass transition temperature of 70°C or higher.

A second cocondensation polyester according to the present invention is substantially linear and is composed of the above-mentioned (a) mononuclear aromatic dicarboxylic acid constituent units, (b) binuclear aromatic dicarboxylic acid constituent units, (c) diol constituent units, (d) polyfunctional constituent units, and additional (e) aliphatic dicarboxylic acid constituent units comprising succinic acid constituent units as their main ingredient, said polyester having an intrinsic viscosity [$\eta$] of 0.5 to 1.5 dl/g.

Furthermore, the present invention provides a process for preparing these cocondasation polyesters, and uses thereof by utilizing excellent gas barrier properties and transparency thereof.

## COCONDENSATION POLYESTER, PROCESS FOR MANUFACTURING SAME AND USES THEREOF

### FIELD OF THE INVENTION

This invention relates to cocondensation polyesters having excellent melt moldability, stretchability, mechanical strength, transparency and gas barrier properties, and being suitable for raw materials for containers, etc., a process for manufacturing the cocondensation polyesters, and uses thereof.

### BACKGROUND OF THE INVENTION

Glass has been widely used as a raw material for containers of seasonings, oil, beer, alcoholic beverages including Japanese sake, soft drinks such as carbonated drinks, cosmetics, detergents, etc. Though glass containers have excellent gas barrier properties, the manufacturing cost is high. The cost is therefore reduced usually by recovering and reutilizing empty containers after use. The cost of transporting glass containers is high due to their heavy weight, and therefore it cannot be sufficiently reduced. In addition to the cost, the glass containers are fragile, and handling thereof is inconvenient.

Accordingly, various plastic containers have come to be used instead of glass containers having such problems as mentioned above. Various kinds of plastics have been used as materials for containers in accordance with the types of items to be stored, and uses thereof. For example, polyethylene terephthalate is excellent in gas barrier properties and transparency, and therefore it is used for containers of seasonings, soft drinks, detergents, cosmetics, etc. Of these containers, those for beer and carbonated drinks are required to have significantly good gas barrier properties, and even polyethylene terephthalate is still insufficient for their containers. Accordingly, containers prepared from polyethylene terephthalte and used for beer and carbonated drinks are required to have an increased wall thickness in order to have improved gas barrier properties. Though demand for polyester containers has currently been markedly increasing, production of polyester having excellent gas barrier properties and melt moldability has been strongly desired to widen the use of the polyester containers.

Japanese Patent L-O-P Publn. No. 64624/1984 discloses polyisophthalate such as a polyethylene terephthalate and polymers thereof as packing materials having good gas barrier characteristics for oxygen and carbon dioxide. It also discloses molded articles thereof.

Japanese Patent L-O-P Publn. No. 67049/1984 filed by the same applicants with those of the above mentioned patent discloses multilayer packing materials consisting of a layer composed of the above-described polyisophthalate or the copolymer thereof and a layer composed of a polyalkylene terephthalate such as polyethylene terephthalate or its copolymer, and molded articles prepared therefrom, for example, bottles.

Further, Japanese Patent L-O-P Publn. No. 39547/1984 discloses gas permeability-resistant multi-layer containers having the innermost layer composed of a polyester having ethylene terephthalate constituent units as a main repeating unit thereof, and external layers composed of a polyester having ethylene terephthalate constituent units as a main repeating unit thereof, a thin part of the containers being oriented at least in one direction.

As a raw material different from polyesters, Japanese Patent L-O-P Publn. No. 36296/1973 discloses a polyamide prepared from a diamine component consisting of m-xylelenediamine or a mixture of m-xylelenediamine and p-xylelenediamine, and a dicarboxylic acid component consisting of a mixture of a specific aromatic dicarboxylic acid and aliphatic dicarboxylic acid, and having good transparency. Though this patent teaches that the polyamide shows good impact strength and excellent workability, no gas barrier properties thereof are described in the patent.

Japanese Patent L-O-P Publn. No. 64866/1981 discloses multi-layer containers having the outermost layer and innermost layer composed of a polyester containing ethylene terephthalate constituent units as its main ingredient, and an intermediate layer composed of a polyamide whose diamine component consists of m-xylelenediamine or a mixture of m-xylelenediamine and p-xylelenediamine, the containers having a thin wall part which is oriented at least in one direction. This patent teaches that the containers are excellent in oxygen barrier properties without decreasing excellent dynamic characteristics, transparency, resistant to chemicals, etc. of the polyester.

2

Furthermore, Japanese Patent L-O-P Publn. No.183243/1983 discloses biaxially stretch blow molded bottle bodies having an innermost surface layer and outermost surface layer composed of polyethylene terephthalate, and an intermediate layer composed of a mixture of polyethylene terephthalate and a xylelene-group containing polyamide.

In prior art as described above, many attempts have been made to improve gas barrier properties of polyalkylene terephthalate such as polyethylene terephthalate by altering the structure or orientation of the polyalkylene terephthalate itself. The gas barrier properties of the polyalkylene terephthalate have not been improved by the modification to such a degree that it has come to be suitable for container material.for sparkling drinks.

Accordingly, in the case of such containers requiring high gas barrier properties as those for sparkling drinks, the gas barrier properties of the containers have to be improved by utilizing such conventional techniques as adopting a multi-layer wall structure therefor or thickening their wall.

OBJECT OF THE INVENTION

An object of the invention is to provide
cocondensation polyesters having excellent gas barrier properties especially for gases such as oxygen and carbon dioxide, and mechanical strength,
cocondensation polyesters having excellent melt moldability and stretchability,
cocondensation polyesters capable of forming a composition having excellent moldability, gas barrier properties and nontoxicity when contacted with food, the composition being capable of giving molded articles having excellent gas barrier properties by incorporating it into a polyalkylene terephthalate, especially polyethylene terephthalate,
a process for manufacturing the cocondensation polyesters as mentioned above,
a composition comprising the cocondensation polyesters, and stretch molded articles, preforms for stretch blow molded articles, stretch blow molded articles, laminated molding articles, stretch laminated molding articles, preforms for multi-layer blow molded articles, and multi-layer blow molded articles.

Furthermore, another object of the present invention is to provide a gas barrier-imparting agent which can improve the gas barrier properties of polyalkylene terephthalate by incorporating the agent into the polyalkylene terephthalate, etc. or laminating the agent with the polyalkylene terephthalate etc..

SUMMARY OF THE INVENTION

A first cocondensation polyester according to this invention is substantially linear and composed of
(a) 25 to 42 mol% of mononuclear aromatic dicarboxylic acid constituent units comprising isophthalic acid constituent units as their main ingredient,
(b) 8 to 25 mol% of binuclear aromatic dicarboxylic acid constituent units comprising 2,6-naphthalenedicarboxylic acid constituent units as their main ingredient,
(c) 48 to 50 mol% of diol constituent units comprising ethylene glycol constituent units as their main ingredient,
(d) 0 to 2 mol% of polyfunctional constituent units derived from a polyfunctional compound having 3 or more carboxyl groups and/or hydroxyl groups in total and 3 to 15 carbon atoms, said polyester having an intrinsic viscosity $[\eta]$ of 0.5 to 1.5 dl/g and a glass transition temperature of $70\,°\mathrm{C}$ or higher.

A first process for the preparation of
a cocondensation polyester composed of 25 to 42 mol% of mononuclear aromatic dicarboxylic acid constituent units (a), 8 to 25 mol% of binuclear aromatic dicarboxylic acid constituent units (b), 48 to 50 mol% of diol constuent units (c) and 0 to 2 mol% of polyfunctional constuent units (d) comprises the steps of
heating a mixture of
(a′) a mononuclear aromatic dicarboxylic acid component comprising isophthalic acid or its ester as the main ingredient thereof,
(b′) a binuclear aromatic dicarboxylic acid component comprising 2,6-naphthalenedicarboxylic acid or its ester as the main ingredient thereof,
(c′) diols comprising ethylene glycol as their main ingredient, and

3

EP 0 394 751 A2

(d') a polyfunctional component composed of a polyfunctional compound having 3 or more carboxyl groups and/or hydroxyl groups in total and 3 to 15 carbon atoms, or of its ester, said heating effecting esterification reaction or ester exchange reaction of the above-described constituents; and

conducting cocondensation polymerization reaction at a temperature in the range of 230 to 300° C in the presence of catalyst comprising a phosphorus compound and a compound selected from germanium compounds, antimony compounds and titanium compounds.

A second cocondensation polyester according to this invention is substantially linear and composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient, said polyester having an intrinsic viscosity $[\eta]$ of 0.5 to 1.5 dl/g.

A second process for the preparation of

a cocondensation polyester composed of 2.5 to 45 mol% of mononuclear aromatic dicarboxylic acid constituent units (a), 2.5 to 25 mol% of of binuclear aromatic dicarboxylic acid constituent units (b), 48 to 50 mol% of diol constutuent units (c), 0 to 2 mol% of polyfunctional constutuent units (d) and 2.0 to 22.5 mol% of aliphatic dicarboxylic acid constituent units comprises the steps of

heating a mixture of

(a') a mononuclear aromatic dicarboxylic acid component comprising isophthalic acid or its ester as the main ingredient thereof,

(b') a binuclear aromatic dicarboxylic acid component comprising 2,6-naphthalenedicarboxylic acid or its ester as the main ingredient thereof,

(c') diols comprising ethylene glycol as their main ingredient,

(d') a polyfuctional component composed of a polyfunctional compound having 3 or more carboxyl groups and/or hydroxyl groups in total and 3 to 15 carbon atoms, or of its ester, and

(e') an aliphatic dicarboxylic acid component comprising succinic acid or its ester as the main ingredient thereof, said heating effecting esterification reaction or ester exchange reaction of the above-described ingredients; and

conducting cocondensation polymerization reaction at a temperature in the range of 230 to 300° C in the presence of catalyst comprising a phosphorus compound and a compound selected from germanium compounds, antimony compounds and titanium compounds.

The cocondensation polyesters according to this invention differ from widely used conventional polyethylene terephthalate in that they comprise as main dicarboxylic acid constituent units mononuclear aromatic dicarboxylic acid constituent units containing mainly isophthalic acid constituent units, and 2,6-naphthalenedicarboxylic acid constituent units, and therefore they are excellent in gas barrier properties, melt moldability, mechanical strength, stretchability, etc.

The cocondensation polyester may impart excellent gas barrier properties to other thermoplastic resins when used with the thermoplastic resins.

A first gas barrier property-imparting agent according to this invention comprises a cocondensation polyester which is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, said polyester having an intrinsic viscosity $[\eta]$ of 0.5 to 1.5 dl/g and a glass transition temperature of 70° C or higher.

A second gas barrier property-imparting agent according to this invention comprises a cocondensation polyester which is substantially linear and is composed of

(a) 2.5 to 45 mol% of mononuclear aromatic dicarboxylic acid constituent units comprising isophthalic acid constituent units as their main ingredient,

4

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient, said polyester having an intrinsic viscosity [$\eta$] of 0.5 to 1.5 dl/g.

A first polyester resin composition according to this invention comprises a polyalkylene terephthalate containing ethylene terephthalate constituent units as its main ingredient and a cocondensation polyester,

wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient, and

(d) 0 to 2 mol% of polyfunctional constituent units derived from a polyfunctional compound having 3 or more carboxyl groups and/or hydroxyl groups in total and 3 to 15 carbon atoms, said cocondensation polyester having an intrinsic viscosity [$\eta$] of 0.5 to 1.5 dl/g and a glass transition temperature of 70 °C or higher.

A second polyester resin composition according to this invention comprises a polyalkylene terephthalate containing ethylene terephthalate constituent units as its main ingredient and a cocondensation polyester,

wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient, said polyester having an intrinsic viscosity [$\eta$] of 0.5 to 1.5 dl/g.

A first stretch molded article of a polyester resin composition according to this invention is a stretch molded article formed from a polyester resin composition comprising a polyalkylene terephthalate containing ethylene terephthalate constituent units as its main ingredient and a cocondensation polyester, wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, said cocondensation polyester having an intrinsic viscosity [$\eta$] of 0.5 to 1.5 dl/g and a glass transition temperature of 70 °C or higher.

A second stretch molded article of a polyester resin composition according to this invention is a stretch molded article formed from a polyester resin composition comprising a polyalkylene terephthalate containing ethylene terephthalate constituent units as its main ingredient and a cocondensation polyester, wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient, said polyester having an intrinsic viscosity $[\eta]$ of 0.5 to 1.5 dl/g.

A first preform for the preparation of a stretch blow molded article of a polyester resin according to this invention is

a preform for a stretch blow molded article formed from a polyester resin composition comprising a polyalkylene terephthalate containing ethylene terephthalate constituent units as their main ingredient and a cocondensation polyester,

wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, said cocondensation polyester having an intrinsic viscosity $[\eta]$ of 0.5 to 1.5 dl/g and a glass transition temperature of 70°C or higher.

A second preform for the preparation of a stretch blow molded article formed from a polyester resin according to this invention is

a preform for the preparation of a polyester resin stretch blow molded article formed from a polyester resin composition comprising a polyalkylene terephthalate containing ethylene terephthalate constituent units as their main ingredient and a cocondensation polyester,

wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient, said polyester having an intrinsic viscosity $[\eta]$ of 0.5 to 1.5 dl/g.

A first polyester stretch blow molded article is

a stretch blow molded article formed from a polyester resin composition comprising a polyalkylene terephthalate containing ethylene terephthalate constituent units as their main ingredient and a cocondensation polyester,

wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, said cocondensation polyester having an intrinsic viscosity $[\eta]$ of 0.5 to 1.5 dl/g and a glass transition temperature of 70°C or higher.

A second polyester stretch blow molded article according to this invention is

a stretch blow molded article formed from a polyester resin composition comprising a polyalkylene terephthalate containing ethylene terephthalate constituent units as their main ingredient and a cocondensation polyester,

wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient, said cocondensation polyester having an intrinsic viscosity [$\eta$] of 0.5 to 1.5 dl/g.

The polyester resin according to this invention is excellent both in gas barrier properties and in transparency. The stretch molded article, preform for a stretch blow molded article and the stretch blow molded article of the present invention are excellent in transparency and gas barrier properties.

A first polyester resin laminated molding article according to this invention is a polyester resin laminated molding article comprising

a layer composed of a cocondensation polyester or

a layer composed of a polyester resin composition comprising a polyalkylene terephthalate comprising ethylene terephthalate constituent units as its main ingredient and a cocondensation polyester, and

a layer composed of a polyalkylene terephthalate comprising ethylene terephthalate constituent units as its main ingredient,

wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, said cocondensation polyester having an intrinsic viscosity [$\eta$] of 0.5 to 1.5 dl/g and a glass transition temperature of 70°C or higher.

A second polyester resin laminated molding article according to this invention comprises

a layer composed of a cocondensation polyester or

a layer composed of a polyester resin composition comprising a polyalkylene terephthalate comprising ethylene terephthalate constituent units as its main ingredient and a cocondensation polyester, and

a layer composed of a polyalkylene terephthalate comprising ethylene terephthalate constituent units as its main ingredient,

wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient, said cocondensation polyester having an intrinsic viscosity [$\eta$] of 0.5 to 1.5 dl/g.

A first polyester resin stretch laminated molding article according to this invention comprises

a layer composed of a cocondensation polyester or

a layer composed of a polyester resin composition comprising a polyalkylene terephthalate comprising ethylene terephthalate constituent units as its main ingredient and a cocondensation polyester, and

a layer composed of polyalkylene terephthalate comprising ethylene terephthalate constituent units as its main ingredient,

wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient, and

(d) 0 to 2 mol% of polyfunctional constituent units derived from a polyfunctional compound having 3 or more carboxyl groups and/or hydroxyl groups in total and 3 to 15 carbon atoms, said cocondensation polyester having an intrinsic viscosity $[\eta]$ of 0.5 to 1.5 dl/g and a glass transition temperature of 70° C or higher.

A second polyester resin stretch laminated molding article according this invention comprises
a layer composed of a cocondensation polyester or
a layer composed of a polyester resin composition comprising a polyalkylene terephthalate comprising ethylene terephthalate constituent units as its main ingredient and a cocondensation polyester, and
a layer composed of a polyalkylene terephthalate comprising ethylene terephthalate constituent units as its main ingredient,
wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient, said cocondensation polyester having an intrinsic viscosity $[\eta]$ of 0.5 to 1.5 dl/g.

A first preform for the preparation of a polyester resin multi-layer blow molded article according to this invention comprises
a layer composed of a cocondensation polyester or
a layer composed of a polyester resin composition comprising a polyalkylene terephthalate comprising ethylene terephthalate constituent units as its main ingredient and a cocondensation polyester, and
a layer composed of a polyalkylene terephthalate comprising ethylene terephthalate constituent units as its main ingredient,
wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient, and

(d) 0 to 2 mol% of polyfunctional constituent units derived from a polyfunctional compound having 3 or more carboxyl groups and/or hydroxyl groups in total and 3 to 15 carbon atoms, said cocondensation polyester having an intrinsic viscosity $[\eta]$ of 0.5 to 1.5 dl/g and a glass transition temperature of 70° C or higher.

Furthermore, a second preform for the preparation of a polyester resin multi-layer blow molded article comprises
a layer composed of a cocondensation polyester or
a layer composed of a polyester resin composition comprising a polyalkylene terephthalate comprising ethylene terephthalate constituent units as its main ingredient and a cocondensation polyester, and
a layer composed of a polyalkylene terephthalate comprising ethylene terephthalate constituent units as its main ingredient,
wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main

8

ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient, said cocondensation polyester having an intrinsic viscosity [η] of 0.5 to 1.5 dl/g.

A first polyester resin multi-layer blow molded article comprises

a layer composed of a cocondensation polyester or

a layer composed of a polyester resin composition comprising a polyalkylene terephthalate containing ethylene terephthalate constituent units as its main ingredient and a cocondensation polyester, and

a layer composed of a polyalkylene terephthalate comprising ethylene terephthalate constituent units as its main ingredient,

wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient, and

(d) 0 to 2 mol% of polyfunctional constituent units derived from a polyfunctional compound having 3 or more carboxyl groups and/or hydroxyl groups in total and 3 to 15 carbon atoms, said cocondensation polyester having an intrinsic viscosity [η] of 0.5 to 1.5 dl/g and a glass transition temperature of 70°C or higher.

A second polyester resin multi-layer blow molded article according to this invention comprises

a layer composed of a cocondensation polyester or

a layer composed of a polyester resin composition comprising a polyalkylene terephthalate containing ethylene terephthalate constituent units as its main ingredient and a cocondensation polyester, and

a layer composed of a polyalkylene terephthalate comprising ethylene terephthalate constituent units as its main ingredient,

wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient, said cocondensation polyester having an intrinsic viscosity [η] of 0.5 to 1.5 dl/g.

The polyester resin laminated molding article, laminated stretch molding article, preform for the preparation of a stretch blow molded article and multi-layer blow molded article according to this invention comprise a layer containing a specific cocondensation polyester and a polyalkylene terephthalate layer, and therefore they have very good transparency and gas barrier properties. These molding articles also have good mechanical strength.


## DETAILED DESCRIPTION OF THE INVENTION


A cocondensation polyester according to the present invention, a process for the preparation thereof and uses thereof are illustrated concretely hereinafter.

The first and second cocondensation polyesters according to this invention basically comprise dicarboxylic acid constituent units and diol constituent units.

Dicarboxylic acid constituent units which the first cocondensation polyester according to this invention comprises are

mononuclear aromatic dicarboxylic acid constituent units (a) comprising isophthalic acid constituent units as

9

their main ingredient, and

binuclear aromatic dicarboxylic acid constituent units (b) comprising 2,6-naphthalate dicarboxylic acid constituent units as their main ingredient.

Dicarboxylic acid constituent units which the second cocondensation polyester according to this invention comprises are

the above-mentioned mononuclear aromatic dicarboxylic acid constituent units (a), binuclear aromatic dicarboxylic acid constituent units (b) and aliphatic dicarboxylic acid constituent units (e) comprising succinic acid constituent units as their main ingredient.

Diol constituent units which the first and second cocondensation polyesters according to this invention comprise are diol constituent units (c) comprising ethylene glycol constituent units as their main ingredient.

The first and second cocondensation polyesters according to this invention may contain, in addition to the the above-described dicarboxylic acid constituent units and diol constituent units, polyfunctional constituent units (d). As a result, the first cocondensation polyester of this invention includes

a tertiary or higher system cocondensation polyester comprising mononuclear aromatic dicarboxylic acid constituent units (a), binuclear aromatic dicarboxylic acid constituent units (b) and diol constituent units (c), and

a quaternary or higher system cocondensation polyester comprising mononuclear aromatic dicarboxylic acid constituent units (a), binuclear aromatic dicarboxylic acid constituent units (b), diol constituent units (c), and polyfunctional constituent units (d).

The second cocondensation polyester of this invention includes a quaternary or higher system cocondensation polyester comprising mononuclear aromatic dicarboxylic acid constituent units (a), binuclear aromatic dicarboxylic acid constituent units (b), aliphatic dicarboxylic acid constituent units (e), and diol constituent units (c), and a five or higher constituent system cocondensation polyester comprising mononuclear aromatic dicarboxylic acid constituent units (a), binuclear aromatic dicarboxylic acid constituent units (b), aliphatic dicarboxylic acid constituent units (e), diol constituent units (c), and polyfunctional constituent units (d).

Mononuclear aromatic dicarboxylic acid constituent units (a) which the first and second cocondensation polyesters of this invention comprise include isophthalic acid constituent units as their main ingredient. The content of isophthalic acid constituent units in mononuclear aromatic dicarboxylic acid constituent units is usually in the range from 50 to 100 mol%, and preferably from 70 to 100 mol%.

As mononuclear aromatic dicarboxylic acid constituent units other than isophthalic acid constituent units in the mononuclear aromatic dicarboxylic acid constituent units (a), for example, there can be mentioned constituent units derived from terephthalic acid and those from phthalic acid. The content of constituent units other than those of isophthalic acid mentioned above in mononuclear aromatic dicarboxylic acid constituent units is usually in the range from 0 to 50 mol%, and preferably from 0 to 30 mol%.

Binuclear aromatic dicarboxylic acid constituent units (b) which the first and second cocondensation polyesters of this invention comprise include 2,6-naphthalene dicarboxylic acid constituent units as their main ingredient. The content of 2,6-naphthalene dicarboxylic acid constituent units in the binuclear aromatic dicarboxylic acid constituent units is usually in the range from 50 to 100 mol%, and preferably from 70 to 100 mol%.

In this invention, as binuclear aromatic dicarboxylic acid constituent units other than 2,6-naphthalene dicarboxylic acid constituent units in the binuclear aromatic dicarboxylic acid constituent units (b), there can be mentioned constituent units derived from binuclear aromatic dicarboxylic acid having 12 to 18 carbon atoms, for example, those from 2,7-naphthalene dicarboxylic acid, 1,4-naphthalene dicarboxylic acid, 1,5-naphthalene dicarboxylic acid or 4,4-biphenyldicarboxylic acid.

The content of binuclear aromatic dicarboxylic acid constituent units other than 2,6-naphthalenedicarboxylic acid constituent units in the binuclear aromatic dicarboxylic acid constituent units is usually in the range from 0 to 50 mol%, and preferably from 0 to 30 mol%.

Aliphatic dicarboxylic acid constituent units (e) which the second cocondensation polyester of this invention comprises include succinic acid constituent units as their main ingredient. The content of the above-described succinic acid constituent units in aliphatic dicarboxylic acid constituent units is usually in the range from 50 to 70 mol%, and preferably from 70 to 100 mol%.

In this invention, as aliphatic dicarboxylic acid constituent units other than succinic acid constituent units in the aliphatic dicarboxylic acid constituent units, there can be mentioned constituent units derived from aliphatic dicarboxylic acid having 3 to 14, preferably 4 to 10 carbon atoms. Such aliphatic dicarboxylic acid constituent units include those derived from adipic acid or from sebacic acid.

The content of aliphatic dicarboxylic acid constituent units other than succinic acid constituent units in the aliphatic dicarboxylic acid constituent units is usually in the range from 0 to 50 mol%, and preferably from 0 to 30 mol%.

Diol constituent units (c) which the first and second cocondensation polyesters of this invention comprise include ethylene glycol constituent units as their main ingredient. The content of ethylene glycol constituent units in the entire diol constituent units is usually in the range from 50 to 100 mol%, and preferably from 70 to 100 mol%.

In this invention, as diol constituent units other than ethylene glycol in the diol constituent units, there can be mentioned constituent units derived from diols each having 3 to 15 carbon atoms such as those from 1,3-propanediol,1,4-butanediol, neopentyl glycol, cyclohexanediol, cyclohexanedimethanol, 1,4-bis(b-hydroxyethoxy)benzene, 1,3-bis(b-hydroxyethoxy)benzene, 2,2-bis(4-b-hydroxyethoxyphenyl)propane and bis(4-b-hydroxyethoxyphenyl)sulfone. The content of ethylene glycol constituent units in the entire diol constituent units is usually in the range from 0 to 50 mol%, and preferably from 0 to 30 mol%.

As exemplified above, diol constituent units (c) which the first and second cocondensation polyesters of this invention comprise include constituent units basically comprising ethylene glycol as their main ingredient, but such ethylene glycol constituent units may contain constituent units derived from a compound having ether linkage which is formed by bonding diol components each other. The content of such constituent units in the cocondensation polyester is preferably not more than 10 mol% of the diol constituent units (c).

Polyfunctional constituent units (d) which the first and second cocondensation polyesters of this invention comprise are derived from a polyfunctional compound having 3 or more, preferably 3 to 4 carboxyl groups and/or hydroxyl groups, and 3 to 15, preferably 3 to 9 carbon atoms.

That is, the polyfunctional constituent units (d) include constituent units derived from a polyfunctional compound having 3 or more carboxyl groups, those derived from a polyfunctional compound having 3 or more hydroxyl groups, and those derived from a polyfunctional compound having 3 or more carboxyl groups and hydroxyl groups in total.

As an example of such polyfunctional constituent units, there can be mentioned those constituent units derived from a polycarboxylic acid, a polyol and an oxycarboxylic acid. Constituent units derived from such a polycarboxylic acid may include those derived from an aromatic polybasic acid such as trimellitic acid, trimesic acid and 3,3',5,5'-tetracarboxydiphenyl; and those derived from an aliphatic polybasic acid such as butanetetracarboxylic acid,

Constituent units derived from a polyol may include those derived from an aromatic polyol such as phloroglucin and 1,2,4,5-tetrahydroxybenzene; and those from an aliphatic polyol such as glycerine, trimethylolethane, trimethylolpropane and pentaerythrytol.

Constituent units derived from an oxycarboxylic acid may include those from an oxycarboxylic acid such as tartaric acid and malic acid.

These polyfunctional constituent units are used singly or in combination to form a cocondensation polyester.

In the first cocondensation polyester of this invention, such mononuclear aromatic dicarboxylic acid constituent units (a) contained in the range from 25 to 42 mol%, preferably 25 to 41 mol%, and still more more preferably 25 to 40 mol%,

binuclear aromatic dicarboxylic acid constituent units (b) are contained in the range from 8 to 25 mol%, preferably 9 to 25 mol%, and still more preferably 10 to 25 mol%, and

diol constituent units (c) are contained in the range from 48 to 50 mol%, and preferably 49 to 50 mol%.

In the first cocondensation polyester of this invention, such polyfunctional constituent units (d) are contained in the range from 0 to 2 mol%, and preferably 0 to 1 mol%. By setting the content of the polyfunctional constituent units (d) in the range from 0 to 2 mol%, the first cocondensation polyester of this invention can maintain a substantially linear structure.

The total of the above-described constituent units (a), (b), (c), and (d) in the first cocondensation polyester of this invention is 100 mol%.

In the second cocondensation polyester of this invention, such mononuclear aromatic dicarboxylic acid constituent units (a) as mentioned above are contained in the range from 2.5 to 45 mol%, preferably 3 to 45 mol%, and still more preferably 5 to 45 mol%,

the binuclear aromatic dicarboxylic acid constituent units (b) are contained in the range from 2.5 to 25 mol%, preferably 3 to 25 mol%, and still more preferably from 5 to 25 mol%,

the aliphatic dicarboxylic acid constituent units (e) are contained in the range from 2.0 to 22.5 mol%, preferably 3 to 20 mol%, and still more preferably from 4 to 20 mol%, and

the diol constituent units (c) are contained in the range from 48 to 50 mol%, and preferably 49 to 50 mol%.

In the second cocondensation polyester of this invention, such polyfunctional constituent units (d) as mentioned above are contained in the range from 0 to 2 mol%, and preferably 0 to 1 mol%. By setting the content of the polyfunctional constituent units (d) in the range from 0 to 2 mol%, the cocondensation polyester of this invention can maintain a substantially linear structure.

The total of the above constituent units (a), (b), (c), (d) and (e) in the second cocondensation polyester of this invention is 100 mol%.

In this invention, diol constituent units which are formed from two or more diol components by ether linkage are not ethylene glycol constituent units, but are included in diol constituent units comprising ethylene glycol constituent units as their main ingredient.

The first and second cocondensation polyesters of this invention having the above composition have a substantially linear structure. Here, "substantially linear structure" designates a chain structure in which the polyesters have a straight chain or branched chain, but no gel-like crosslinked structure (network structure). This means that, when 1 g of the cocondensation polyester of this invention is dissolved in 20 ml of o-chlorophenol, the cocondensation polyester is perfectly dissolved in o-chlorophenol without leaving a gel component.

When the first cocondensation polyester according to this invention is composed of the above-described mononuclear aromatic dicarboxylic acid constituent units (a), binuclear aromatic dicarboxylic acid components (b) and diol constituent units (c), the cocondensation polyester has a straight chain structure. And when the first cocondensation polyester of this invention is composed of the above-described mononuclear aromatic dicarboxylic acid constituent units (a), binuclear aromatic dicarboxylic acid constituent units (b), diol constituent units (c) and polyfunctional constituent units (d), the cocondensation polyester has a branched chain structure.

When the second cocondensation polyester according to this invention is composed of the above-described mononuclear aromatic dicarboxylic acid constituent units (a), binuclear aromatic dicarboxylic acid components (b), aliphatic dicarboxylic acid constituent units (e) and diol constituent units (c), the cocondensation polyester has a straight chain structure. Furthermore, when the second cocondensation polyester of this invention is composed of the above-mentioned mononuclear aromatic dicarboxylic acid constituent units (a), binuclear aromatic dicarboxylic acid constituent units (b), aliphatic dicarboxylic acid constituent units (e), diol constituent units (c) and polyfunctional constituent units (d), the cocondensation polyester has a branched chain structure.

The first and second cocondensation polyesters according to this invention are required to have an intrinsic viscosity (measured in the solvent of o-chlorophenol) in the range from 0.5 to 1.5 dl/g, and preferably 0.6 to 1.2 dl/g. When the intrinsic viscosity of the cocondensation polyester becomes higher than 1.5 dl/g, the melt formability of the cocondensation polyester lowers, and its stretchability also lowers. In the case where the intrinsic viscosity thereof is lower than 0.5 dl/g, the mechanical strength of the cocondensation polyester and its stretch molded products decreases with the viscosity value. The cocondesation polyesters having an intrinsic viscosity in the range from 0.6 to 1.2 dl/g have particularly superior excellent melt formability, and molded articles produced from the cocondensation polyesters have excellent mechanical strength.

Furthermore, the first cocondensation polyester according to this invention has a glass transition temperature of at least 70°C, and preferably in the range from 70 to 90°C. When the cocondensation polyester has a glass transition temperature of 70°C or higher as described above, the cocondensation polyester can be sufficiently dried. Sufficient drying of the polyester effectively prevents decomposition of the polyester caused by included water during melt molding. As a result, there can be inhibited inclusion of low molecular weight polyesters in the molded articles during the molding operation.

The second cocondensation polyester according to this invention has a glass transition temperature of at least 55°C, and preferably in the range from 55 to 80°C. It is more preferable that the cocondensation polyester has a glass transition temperature in the range from 60 to 75°C. When the cocondensation polyester has a preferable glass transition temperature of at least 55°C as described above, the cocondensation polyester can be sufficiently dried. Sufficient drying of the polyester effectively prevents decomposition of the polyester caused by included water during melt molding. As a result, there can be inhibited inclusion of low molecular weight polyesters in the molded articles during the molding operation. Accordingly, the containers prepared by forming the first and second cocondensation polyesters show inhibition of low molecular weight polyester elution in the filler, and they are therefore excellent in safety.

When the cocondensation polyesters of this invention contain mononuclear aromatic dicarboxylic acid constituent units other than isophthalic acid, binuclear aromatic dicarboxylic acid constituent units other than 2,6-naphthalene dicarboxylic acid, aliphatic dicarboxylic acid constituent units other than succinic acid and diol constituent units other than ethylene glycol, these constituent units may be contained solely, or two or more types of these constituent units may be contained in combination.

The first and second cocondensation polyesters of this invention can be prepared by conventional processes.

In the preparation of the cocondensation polyester of the present invention by melt polycondensation process, there may be used a so-called direct polycondensation process or a so-called ester exchange polycondensation process.

To explain melt polycondensation process in details, material components are fed into the reaction system simultaneously or succesively one by one, and heated to effect esterification reaction or ester exchange reaction (or ether exchange reaction in some cases) of these materials, thereby forming an initial polycondensate. Then the initial polycondensate is heated to a temperature above the melting point thereof, thereby allowing the initial polycondensate to undergo polycondensation reaction in a molten state.

That is, by the above process, the first cocondensation polyester of this invention can be prepared by heating at a specific temperature a mixture containing containing in a predetermined proportion

a mononuclear aromatic dicarboxylic acid component (a') which can form the above-mentioned mononuclear aromatic dicarboxylic acid constituent units (a),

a binuclear aromatic dicarboxylic acid component (b') which can form binuclear aromatic dicarboxylic acid constituent units (b),

a diol component (c') which can form diol constituent units (c), and

a polyfunctional component (d') which can form polyfunctional constituent units (d) to achieve esterification reaction or ester exchange reaction of the above components; and effecting polycondensation reaction in the presence of a specific catalyst.

By the above-described process, the second cocondensation polyester of this invention can be prepared by heating at a specific temperature a mixture containing in a predetermined proportion

a mononuclear aromatic dicarboxylic acid component (a') which can form the above-mentioned mononuclear aromatic dicarboxylic acid constituent units (a),

a binuclear aromatic dicarboxylic acid component (b') which can form binuclear aromatic dicarboxylic acid constituent units (b),

an aliphatic dicarboxylic acid component (e') which can form aliphatic dicarboxylic acid constituent units (e),

a diol component (c') which can form diol constituent units (c), and

a polyfunctional component (d') which can form polyfunctional constituent units (d), to achieve esterification reaction or ester exchange reaction of the above-mentioned components; and effecting polycondensation reaction in the presence of a specific catalyst.

In the above-described process for the preparation of the first and second cocondensation polyesters of this invention, the mononuclear aromatic dicarboxylic acid component (a') which can form mononuclear aromatic dicarboxylic acid constituent units (a) include isophthalic acid, mono/diester of the acid component, or ester of diol such as bis(b-hydroxyethyl) ester; and a mononuclear aromatic dicarboxylic acid component used with isophthalic acid and its derivative includes an acid component such as terephthalic acid, phthalic acid, etc., mono/diester of these acids, or ester of diol such as bis(b-hydroxyethyl) ester. Isophthalic acid and/or its derivative are used in such an amount that isophthalic acid constituent units become main ingredient constituent units of the cocondensation polyester containing other constituent units derived from mononuclear aromatic dicarboxylic acid or its derivative.

The binuclear aromatic dicarboxylic acid component (b') which can form the binuclear aromatic dicarboxylic acid constituent units (b) includes 2,6-naphthalene dicarboxylic acid, mono/diester of the acid component, or ester of diol such as bis(b-hydroxyethyl) ester. Furthermore, the binuclear aromatic dicarboxylic acid component used with 2,6-naphthalene dicarboxylic acid and its derivative includes such binuclear aromatic dicarboxylic acids each having 12 to 18 carbon atoms as 2,7-naphthalene dicarboxylic acid, 1,4-naphthalene dicarboxylic acid, 1,5-naphthalene dicarboxylic acid and 4,4'-biphenyldicarboxylic acid, mono/diester of these acid components, or ester of diol such as bis(b-hydroxyethyl) ester. 2,6-naphthalene dicarboxylic acid and/or its derivative are used in such an amount that 2,6-naphthalenedicarboxylic acid constituent units become a main ingredient of the cocondensation polyester containing other constituent units derived from another binuclear aromatic dicarboxylic acid or its derivative.

The aliphatic dicarboxylic acid component (e') which can form the aliphatic dicarboxylic acid constituent units (e) includes succinic acid or its mono/diester, or ester of diol such as bis(b-hydroxyethyl) ester. Furthermore, the aliphatic component used with succinic acid and its derivative includes adipic acid, sebacic acid, mono/diester of these acids, or ester of diol such as bis(b-hydroxyethyl) ester. Succinic acid and/or its derivative are used in such an amount that succinic acid constituent units become main ingredient of the cocondensation polyester containing other constituent units derived from aliphatic dicarboxylic acid or its derivative.

The diol component (c') which can form the diol constituent units (c) includes ethylene glycol or its

13

mono/diester. The diol component used with ethylene glycol or its derivative includes such diols each having 3 to 15 carbon atoms as 1,3-propanediol, 1,4-butanediol, neopentyl glycol, cyclohexanediol, cyclohexanedimethanol, 1,4-bis(b-hydroxyethoxy)benzene, 1,3-bis(b-hydroxyethoxy)benzene, 2,2-bis(4-b-hydroxyethoxyphenyl)propane and bis(4-b-hydroxyethoxy phenyl)sulfone. The ethylene glycol and/or its derivative are used in such an amount that the ethylene glycol constituent units become main ingredient constituent units derived from another diol component or its derivative.

The polyfunctional component which can form the polyfunctional constituent units (d) includes polyfunctional compounds each having 3 or more carboxyl groups and/or hydroxyl groups and 3 to 15 carbon atoms, or their esters. Such polyfunctional compounds include

aromatic polybasic acids such as trimellitic acid, trimesic acid and 3,3',5,5'-tetracarboxydiphenyl and their esters;

aliphatic polybasic acids such as butanetetracarboxylic acid and their esters;

aromatic polyols such as phloroglucin and 1,2,4,5-tetrahydroxybenzene and their esters;

aliphatic polyols such as glycerine, trimethylolethane, trimethylolpropane and pentaerythritol, and their esters; and

oxypolycarboxylic acids such as tartaric acid and malic acid, and their esters.

These components described above are mixed in such a manner that the content of each constituent units derived from the corresponding component in the reaction system become almost equal to the content of constituent units in the resultant cocondensation polyesters.

That is, in the process for the preparation of the first cocondensation polyester, the mononuclear aromatic dicarboxylic acid component (a'), binuclear aromatic dicarboxylic acid component (b'), diol component (c') and polyfunctional component (d') are preferably mixed in such a manner that in the reaction system the contents of each constituent units become as follows: the mononuclear aromatic dicarboxylic acid constituent units(a) 25 to 42 mol%; binuclear aromatic dicarboxylic acid constituent units (b) 8 to 25 mol%; diol constituent units (c) 48 to 50 mol%; and polyfunctional constituent units (d) 0 to 2 mol%.

In the process for the preparation of the second cocondensation polyester, the mononuclear aromatic dicarboxylic acid component (a'), binuclear aromatic dicarboxylic acid component (b'), aliphatic dicarboxylic acid component (e'), diol component (c') and polyfunctional component (d') are preferably mixed in such a manner that the contents of each constituent units in the reaction system becomes as follows: the mononuclear aromatic dicarboxylic acid constituent units (a) 2.5 to 45 mol%; binuclear aromatic dicarboxylic acid constituent units (b) 2.5 to 25 mol%; aliphatic dicarboxylic acid constituent units (e) 2.0 to 22.5 mol%; diol constituent units (c) 48 to 50 mol%; and polyfunctional constituent units (d) 0 to 2 mol%.

During the preparation of the first and second cocondensation polyesters of this invention, ethylene glycol can be used, for example, as a solvent for the catalyst. It is therefore a common practice to use ethylene glycol in an exceesive amount compared with the stoichiometrical one for the total dicarboxylic acid fed into the system. Accordingly, ethylene glycol in amount exceeding the above described range may be fed into the reaction system.

In the case where the above-mentioned materials are fed into the reaction system in the state of diols and carboxylic acids, esterification reaction is conducted, and in the case where they are fed in the state of esters, ester exchange reaction is conducted. In the case where the materials contain both of them, ester exchange reaction and esterification reaction are conducted. Such esterification reaction and ester exchange reaction are effected usually at a temperature of 180 to 260°C, and preferably at a temperature of 200 to 260°C. The esterification reaction and ester exchange reaction can also be conducted by setting the heating temperature, in the above range, at a relatively low temperature (180 to 205°C, for example) at first, and then raising it to a relatively high temperature (205 to 260°C, for example). The above-described reactions can be allowed to take place under any pressure conditions, for example, a reduced pressure, normal pressure and under pressure, but usually they are conducted under a high pressure. In this case the pressure is usually 0.5 to 2.5 kg/cm$^2$, and preferably 1.0 to 2.0 kg/cm$^2$. In the first process for the preparation of cocondensation polyester of this invention, under such a condition, the reaction under the above-described conditions finishes usually in 3 to 15 hours, preferably in 4 to 10 hours. In the second process for the preparation of cocondensation polyester of this invention, the reaction finishes usually in 3 to 12 hours, and preferably in 4 to 8 hours. Water and other by-products produced in the above-described reaction are removed from the reaction system during the reaction.

The above-described esterification reaction or ester exchange reaction can be conducted by using a catalyst or without using a catalyst.

When the esterification reaction or ester exchange reaction is conducted by using a catalyst, catalysts effective for the reaction include compounds of metals such as calcium, magnesium, lithium, zinc, cobalt and manganese. As the types of these compounds, there can be mentioned oxides, hydroxides, halides, inorganic acid salts, organic acid salts, etc.

In the esterification reaction or ester exchange reaction, a variety of additives such as production inhibitor of diethylene glycol, thermal stabilizer, optical stabilizer, lubricant, pigment, dye can be used.

Examples of inhibitors for inhibiting the formation of diethylene glycol, which can be used here, include amines such as triethylamine and tri-n-butylamine, and quaternary ammonium compounds such as tetraethylammonium hydroxide and tetrabutylammonium hydroxide. As stabilizers such as thermal stabilizer, phosphorus compound such as phosphoric acid, phosphorous acid, hypophosphorous acid, or their esters can be employed.

Some of the phosphorus compounds used in the above esterification reaction or ester exchange reaction as thermal stabilizers can act as a phosphorus compound type catalyst in the next stage, and some of the inhibitors for inhibiting the formation of diethylene glycol may form a salt, complex, double salt, etc. with a specific metal and act as a catalyst in the next process.

After conducting the esterification reaction or ester exchange reaction as described above, the resultant products are allowed to undergo cocondensation reaction.

The cocondensation reaction is conducted in the presence of a catalyst composed of phosphorus compound and a compound selected from the group consisting of germanium compounds, antimony compounds and titanium compounds.

The compound selected from the group consisting of germanium compounds, antimony compounds and titanium compounds used in this invention may be in the state of metallic germanium, antimony or titanium, or in a state of an oxide, hydroxide, halide, organic salt, complex, double salt, alcoholate or phenolate.

Such compounds include

reaction products of germanium, antimony or titanium with a tertiary amine such as n-butylamine or triethylamine;

oxides such as antimony trioxide, titanium oxide (I), titanium oxide (II), and oxides of germanium and others;

alkoxides such as titanium tetrabutoxide, titanium tetramethoxide, titanium tetraisopropoxide, germanium butoxide, and germanium ethoxide; and

reaction products of titanium oxide (I) with acetyl acetonate, isopropyl tris(p-dodecylbenzenesulfonyl)titanate and isopropyl tris(m-hydroxybenzenesulfonyl)titanate.

These catalysts can be used solely or in combination of two or more thereof. These catalysts are used in an amount of usually $10^{-5}$ to $10^{-2}$ gram atom, and preferably $5 \times 10^{-5}$ to $5 \times 10^{-3}$ gram atom in terms of antimony, germanium or titanium atom per 1 mole of mononuclear aromatic dicarboxylic acid or binuclear aromatic dicarboxylic acid.

As phosphorus compounds which can be used as a catalyst together with the above compounds include, for example, phosphoric acid, phosphorous acid, hypophosphorous acid, polyphosphoric acid, esters of the above phosphoric acids such as monomethyl phosphoric acid or dimethyl phosphoric acid, and phosphorus compounds such as phosphine and phosphite. The phosphorus compounds are used in an amount of usually $10^{-5}$ to $10^{-2}$ gram atom, and preferably $2 \times 10^{-5}$ to $5 \times 10^{-3}$ gram atom in terms of phosphorous atom per 1 mol of mononuclear aromatic dicarboxylic acid and binuclear aromatic dicarboxylic acid in total.

A compound selected from the group consisting of the above-mentioned compounds of germanium, antimony and titanium, and a phosphorus compound are used in the proportion of usually 10:1 to 1:10, and preferably 5:1 to 1:5 in terms of atoms.

Such catalysts can be added to the reaction system directly or in the form of a solution or a dispersion after dissolving or dispersing them in a solvent. To dissolve or disperse the catalyst, a diol such as ethylene glycol can be used as a solvent, and the diol, etc. added to the reaction system as a catalyst acts not only as a solvent of the catalyst but also as a reactant.

The catalyst may be fed into the polycondensation reaction system either at the initial stage of the esterification reaction or ester exchange reaction, or before transfer of the system to the cocondensation stage.

The reaction temperature in the presence of such catalysts is 230 to 300°C, preferably 250 to 280°C, and more preferably 260 to 275°C. That is, the cocondensation reaction is conducted by keeping the reaction product of the above-described esterification reaction or ester exchange reaction (ether exchange reaction in some cases) in a molten state.

The cocondensation reaction can be conducted at a high pressure, normal pressure, or reduced pressure, but the reaction effected under a reduced pressure is preferable. By conducting the reaction under a reduced pressure, excessive ethylene glycol is removed from the reaction system.

15

The above-described cocondensation reaction is preferably conducted in an inert atmosphere.

The viscosity of the reaction product increases with the lapse of the time, that is, with the progress of the cocondensation reaction. The intrinsic viscosity [h] of the cocondensation polyester becomes 0.5 to 1.5 dl/g, preferably 0.6 to 1.2 dl/g with the lapse of time of usually 1 to 15 hours, preferably 2 to 10 hours, though it may differ depending on other conditions such as the reaction temperature.

The cocondensation polyester of the present invention, obtained as described above can be used as materials for preparing molded articles and stretch molded articles. That is, the cocondensation polyester of this invention can be formed into films, sheets, fibers, containers and other formed articles, and such formed articles may still be stretched.

Stretch molded articles prepared from the cocondensation polyester of this invention are excellent in mechanical strength and gas barrier properties. In particular, when used for coating electrical parts, electronic parts, metallic parts and the like, it is effective in protecting electrical/electronic circuits or in preventing corrosion of metal. Stretched films of the cocondensation polyester may be effectively used for capacitors, motors, transformers, and wire coatings by utilizing electric characteristics thereof. Furthermore, they can also be used as films for packing foods because of the excellent gas barrier properties.

As described above, the cocondensation polyester of this invention exhibits good gas barrier properties when used singly. However, the use thereof in combination with other thermoplastic resin significantly improves gas barrier properties of the molded articles obtained. That is, cocondensation polyester of this invention can be used as a gas barrier property-imparting agent.

In the present invention the cocondensation polyester may be used as a gas barrier property-imparting agent by the following two procedures: a procedure whereby a layer prepared from the cocondensation polyester and a layer prepared from other thermoplastic resin are laminated together to form a molding article; and a procedure whereby the cocondensation polyester is blended with other thermoplastic resin, and the resultant resin composition is used to obtain a molding article.

The thermoplastic resin which can be used here includes polyester, polyamide, polycarbonate or polyolefin. In this invention, it is particularly preferable to use polyesters such as polyalkylene terephthalate which comprises ethylene terephthalate as its main ingredient.

The first polyester resin composition according to this invention is basically composed of polyalkylene terephthalate and the first cocondensation polyester of this invention, and the second polyester resin composition of this invention is basically composed of polyalkylene terephthalate and the second cocondensation polyester of this invention.

The polyalkylene terephthalate used in this invention comprises ethylene terephthalate constituent units as its main ingredient, and the content of the ethylene terephthalate constituent units is usually 50 mol% or higher, and preferably 70 mol% or higher.

Accordingly, the polyalkylene terephthalate used in this invention may contain aromatic dicarboxylic acid constituent units other than terephthalic acid constituent units in a content of usually less than 50 mol%, and preferably less than 30 mol%.

As the aromatic dicarboxylic acid constituent units other than the terephthalic acid constituent units, there can be concretely mentioned constituent units derived from isophthalic acid, phthalic acid and naphthalene dicarboxylic acid. As diol constituent units which the polyalkylene terephthalate comprises, ethylene glycol constituent units are preferable. However, small amounts of diol constituent units other than ethylene glycol constituent units may also be contained. The diol constituent units other than ethylene glycol constituent units include constituent units derived from a diol having 3 to 15 carbon atoms such as 1,3-propanediol, 1,4-butanediol, neopentyl glycol, cyclohexanediol, cyclohexanedimethanol, 1,4-bis(b-hydroxyethoxy) benzene, 1,3-bis(b-hydroxyethoxy)benzene, 2,2-bis(4-b-hydroxyethoxyphenyl)propane and bis(4-b-hydroxyethoxyphenyl)sulfone.

In addition to the above-mentioned aromatic dicarboxylic acid constituent units and diol constituent units, the polyalkylene terephthalate may also contain constituent units derived from other polyfunctional compounds, if necessary.

The polyfunctional compounds from which the constituent units thereof are derived include aromatic polybasic acids such as trimellitic acid, trimesic acid, and 3,3′,5,5′-tetracarboxydiphenyl, aliphatic polybasic acids such as butanetetracarboxylic acid, aromatic polyols such as phloroglucin and 1,2,4,5-tetrahydroxybenzene, aliphatic polyols such as glycerine, trimethylolethane, trimethylolpropane and pentaerythritol, and oxycarboxylic acid such as tartaric acid and malic acid.

The contents of the constituent units in the polyalkylene terephthalate are as follows: that of terephthalic acid constituent units usually 50 to 100 mol%, and preferably 70 to 100 mol%; that of aromatic dicarboxylic acid constituent units other than terephthalic acid constituent units usually 0 to 50 mol%, and preferably 0 to 30 mol%; that of ethylene glycol constituent units usually 50 to 100 mol%, and preferably 70 to 100

EP 0 394 751 A2

mol%; that of diol constituent units other than ethylene glycol constituent units usually 0 to 50 mol%, and preferably 0 to 30 mol%; and that of polyfunctional compound constituent units usually 0 to 2 mol%, and preferably 0 to 1 mol%. The intrinsic viscosity [h] of such polyalkylene terephthalate (measured in o-chlorophenol at 25°C) is usually 0.5 to 1.5 dl/g, and preferably 0.6 to 1.2 dl/g. Its melting point is usually 210 to 265°C, and preferably 220 to 260°C, and its glass transition temperature is usually 50 to 120°C, and preferably 60 to 100°C.

The cocondensation polyester used in this invention and the preparation thereof has already been described.

The first and second polyester resin compositions according to this invention comprise the cocondensation polyester in an amount of usually 2 to 500 parts by weight, preferably 3 to 300 parts by weight, and more preferably 5 to 100 parts by weight based on 100 parts by weight of the polyalkylene terephthalate.

The first and second polyester resin compositions of this invention may contain, if necessary, in addition to the above-mentioned polyalkylene terephthalate and cocondensation polyester, conventionally known additives such as a nucleating agent, inorganic filler, lubricant, slip agent, anti-blocking agent, stabilizer, antistatic agent, anti-fogging agent, and pigment so long as the object of this invention is not impaired.

The first and second polyester resin compositions of this invention can be molded into films, sheets, fibers, containers and other molded articles having various shapes by conventional molding processes, and the resultant molded articles can be used in an unstretched state.

Furthermore, the first and second polyester resin compositions of this invention can be stretched and molded into films, sheets and containers, and the resultant molded articles are still more excellent in gas barrier properties than the unstretched molded articles.

The first and second polyester resin stretch molded articles of this invention are described in details below.

The first polyester resin stretch molded article of this invention is a stretch molded article composed of the first polyester resin composition of this invention, and the second polyester resin stretch molded article of this invention is a stretch molded article composed of the second polyester resin composition of this invention.

The first and second stretch molded articles of polyester resin compositions according to the present invention include monoaxially stretched articles and biaxially stretched articles, and they may be films, sheets or fibers. In the case where the first and second polyester resin stretch molded articles are those monoaxially stretched, their draw ratio is usually in the range 1.1 to 10, preferably 1.2 to 8, and particularly preferably 1.5 to 7 in the transverse direction. When the first and second polyester resin stretch molded articles are biaxially stretched articles, its draw ratio is usually in the range from 1.1 to 8, preferably from 1.2 to 7, and more preferably from 1.5 to 6 in lengthwise direction, and in the range from 1.1 to 8, preferably from 1.2 to 7, and more preferably from 1.5 to 6 in widthwise direction. The polyester resin stretch molded articles of this invention can be conducted to heat setting depending on the usage.

Stretch molded articles can be produced from the first and second polyester resin compositions of this invention by any one of known processes. Generally, initial molded articles such as films or sheets formed from the above- mentioned polyester resin composition or a composition prepared by adding in accodance with necessity the above-mentioned additives to the polyester resin composition are reheated directly or after solidifying them by cooling once below their glass transition temperature, and stretched in the temperature range of their glass transition temperature (Tg) to melting point, and preferably Tg to Tg +80°C. Heat setting of the stretch molded articles are carried out by heating them for a short period at least at the stretching temperature

There can be mentioned the following typical processes for manufacturing stretch molded articles from the first and second polyester resin compositions of this invention in the case of molded articles being films or sheets: stretching an unstretched film or sheet in the uniaxial direction (uniaxial stretching): stretching in the longitudinal direction at first and further stretching in the transverse direction (biaxial stretching): stretching simultaneously both in the longitudinal and transverse directions (biaxial stretching): biaxially stretching at first and repeatedly stretching in one of the two directions: biaxially stretching at first and stretching in both directions: and stretch molding a film or sheet by reducing the pressure of a space between the film or sheet and the mold (so-called vacuum molding).

Stretch molded articles prepared from the first and second cocondensation polyesters can be manufactured by a process similar to those used for manufacturing the first and second polyester resin stretch molded articles.

Further, these polyester resin stretch molded articles may be prepared in a laminated form by laminating with other resin.

17

There can be mentioned the following processes for manufacturing stretch molded articles comprising a layer composed of the first or second resin composition of the present invention: laminating at first an initial molded article such as a polyester resin film or sheet with another resin film or sheet to form a single layer or multi-layers and stretching the laminated body: and bonding to a stretch molded article composed of the first or second polyester resin composition of this invention another resin film or sheet.

Stretch molded articles comprising a layer composed of the first and second resin cocondensation polyester of the present invention may also be manufactured by a process similar to those for manufacturing the above-described stretch molded articles.

The polyester resin stretch molded articles of this invention are excellent in mechanical strength, gas barrier properties, etc., and therefore they can be used for various products such as films, sheets, tubular articles, containers and bottles.

The preforms for manufacturing the first and second polyester resin stretch blow molded articles of the present invention are those formed from the first and second polyester resin compositions of this invention, and can be manufactured by a conventional process. A preform for manufacturing the polyester resin stretch blow molded article of this invention, for example, is obtained by molding a tubular article composed of the above-mentioned resin composition.

The first and second polyester resin stretch blow molded articles according to this invention are stretch blow molded articles prepared by forming the first and second polyester resin compositions of this invention, and can be manufactured by stretch blow molding the above-mentioned preform for a stretch blow molded article. The first and second polyester resin stretch blow molded articles of this invention are uniaxially stretch molded ones in some cases, and biaxially stretch molded ones in other cases. Generally, biaxially stretch molded articles are appropriate due to their excellent mechanical strength and gas barrier properties. The stretch ratio of the above-described polyester resin stretch molded articles can directly apply in the stretch blow molded articles of the present invention. The first and second polyester resin stretch blow molded articles of this invention are manufactured by stretch blow molding the preforms for the first and second polyester resin blow molded articles. As one of the stretch blow molding methods, there can be mentioned a method (biaxial stretch blow molding) wherein the above-mentioned preform is stretched in the longitudinal direction, and further stretched in the transverse direction by blow molding.

The polyester resin stretch blow molded articles of the present invention are excellent in mechanical strength, heat resistant characteristics and gas barrier properties, and accordingly they can be used for various purposes. Especially, biaxially stretch blow molded containers of the present invention have significantly excellent gas barrier prpoperties, and accordingly they show very good characteristics when used as containers of seasonings, oil, beer, alcoholic beverages such as Japanese sake, soft drinks such as cola, carbonated drinks and juice, cosmetics and detergents. Especially, the wall thickness of the above-mentioned containers may be decreased when they are used for beer and carbonated drinks, and the effective period of the contents may be extended.

The first and second polyester resin laminated molding articles of the present invention are illustrated below.

The first and second polyester resin laminated molded articles of this invention basically comprise a layer composed of a specific cocondensation polyester or a layer composed of a resin composition comprising the above-mentioned specific cocondensation polyester and a polyalkylene terephthalate (both layers referred to as "cocondensation polyester layer" in some cases hereinafter), and a polyalkylene terephthalate layer with which the cocondensation polyester layer is laminated.

A cocondensation polyester used for the first polyester resin laminated molding article of the present invention is the first cocondensation polyester of this invention, and a cocondensation polyester used for the second polyester resin laminated molding article is the second cocondensation polyester of this invention.

In the case of using a blended composition of a cocondensation polyester and a polyalkylene terephthalate for preparing the first and second polyester resin laminated molding articles of the present invention, the blended composition comprise the cocondensation polyester in an amount of usually 1 to 100 parts by weight, preferably 2 to parts by weight, and particularly preferably 3 to 30 parts by weight based on 100 parts by weight of of the polyalkylene terephthalate.

Further, in the present invention, the cocondensation polyester may be used singly or in combination with another resin (used as a resin composition). Another resin may further be incorporated so long as it does not impair the properties of the polyester or composition.

Furthermore, the polyester or resin composition may contain conventionally known additives such as a nucleating agent, inorganic filler, lubricant, slip agent, anti-blocking agent, stabilizer, antistatic agent, anti-haze agent and pigment.

A layer with which a layer composed of the above-mentioned cocondensation polyester or a layer composed of a composition comprising the cocondensation polyester and polyalkylene terephthalate, that is a cocondensation polyester layer, is laminated

is a layer composed of polyalkylene terephthalate comprising ethylene terephthalate constituent units as main constituent units thereof.

As a polyalkylene terephthalate used here, there can be mentioned the polyalkylene terephthalate used with the above-mentioned cocondensation polyester for preparing the resin composition. The polyalkylene terephthalate is the same with the one used for preparing the first and second polyester resin compositions of the present invention.

The following laminated molding articles can be concretely mentioned as those of the present invention:

a two-layer laminated molding article comprising a cocondensation polyester layer and a polyalkylene terephthalate layer (the double layers being sometimes referred to as polyalkylene terephthalate layer):

a three-layer laminated molding article comprising a cocondensation polyester layer (intermediate layer) and two polyalkylene terephthalate outer layers;

a three-layer laminated molding article comprising a polyalkylene tetephthalate layer (intermediate layer) and two outer cocondensation polyester layers;

a multi-layer laminated molding article prepared by alternately laminating a cocondensation polyester layer and the above-mentioned polyalkylene terephthalate layer, and having at least four-layers , both outermost layers being polyalkylene terephthalate layers;

a multi-layer laminated molding article prepared by alternately laminating a cocondensation polyester layer and a polyalkylene terephthalate layer, and having at least four layers, both outermost layers being cocondensation polyester layers; and

a multi-layer laminated molding article prepared by alternately laminating a cocondensation polyester layer and a polyalkylene terephthalate layer, both outermost layers being a cocondensation layer and a polyalkylene terephthalate layer.

As described above, the cocondensation polyester layer may be either a layer prepared from a specific cocondensation polyester layer of this invention only or a layer prepared from a resin composition of the cocondessation polyester and a polyalkylene terephthalate.

The above-described laminated molding articles can be used as products having various shapes, for example, sheet-like articles, tubular articles, hollow articles, containers. The laminated molding articles can be manufactured by a conventional process.

There is no thickness restriction of the cocondensation polyester layer and polyalkylene terephthalate layer which the laminated molding articles comprise. The thickness can be determined appropriately depending on the use of the laminated molding articles. For example, when the laminated article is the above-described two-layer laminated article, the thickness is usually 4 to 350 $\mu$m, and preferably 6 to 200 $\mu$m, and that of polyalkylene terephthalate layer is 8 to 600 $\mu$m, and preferably 10 to 500 $\mu$m. When the laminated article is the former of the above-described three-layer laminated articles, the thickness of the cocondensation polyester intermediate layer is usually 4 to 350 $\mu$m, and preferably 6 to 200 $\mu$m, and each thickness of both outer layers prepared from polyalkylene terephthalate layers is usually 4 to 300 $\mu$m, and preferably 5 to 250 $\mu$m respectively. When the laminated molding article is the latter of the above-described three-layer laminated articles, the thickness of the intermediate layer prepared from polyalkylene terephthalate is usually 8 to 600 $\mu$m, and preferably 10 to 500 $\mu$m, and each thickness of both outer layers prepared from cocondensation polyester layers is usually 4 to 100 $\mu$m, and preferably 6 to 50 $\mu$m. Further, when the laminated article is the above-described multi-layer laminated article having four or more layers, each thickness of the intermediate layers and outermost layers composed of cocondensation polyester layers, and that of an intermediate layer and outermost layers composed of polyalkylene terephthalate layers can be similarly determined.

These laminated molding articles are excellent in strechability, electric characteristics (especially electric insulation), mechanical strength, transparency, gas barrier properties, etc.

The laminated articles described above can further be formed into stretch molded articles.

That is, the first and second polyester resin stretch laminated molding articles of the present invention can be manufactured by stretching the above-described laminated articles.

The stretch laminated molding articles of the present invention can be produced by any one of known processes. Generally, initial molded articles such as films or sheets formed from the above-mentioned cocondensation polyester resin composition alone or a composition prepared by adding, in accordance with necessity, the above-described additives to the polyester resin composition are stretched directly or after solidifying them by cooling once below their glass transition temperature, the stretching being carried out in the temperature range of their glass transition temperature (Tg) to melting point, and preferably Tg to Tg +80 °C.

There can be mentioned the following typical processes for manufacturing the stretch laminated molding articles in the case of the initial molding articles being films or sheets: stretching an unstretched film or sheet in the uniaxial direction (uniaxial stretching): stretching in the longitudinal direction at first and further stretching in the transverse direction (biaxial stretching): stretching simultaneously both in the longitudinal and transverse directions (biaxial stretching): biaxially stretching at first and repeatedly stretching in one of the two directions: biaxially stretching at first and stretching in both directions: and stretch molding a film or sheet by reducing the pressure of a space between the film or sheet and the mold (so-called vacuum molding).

In the case where the stretching is conducted monoaxially, their draw ratio is usually in the range 1.1 to 10, preferably 1.2 to 8, and particularly preferably 1.5 to 7. In the case where the stretching is conducted biaxially, the draw ratio is usually in the range from 1.1 to 8, preferably from 1.2 to 7, and particularly preferably from 1.5 to 6 in the longitudinal direction, and in the range from 1.1 to 8, preferably from 1.2 to 7, and particularly preferably from 1.5 to 6 in the transverse direction. The polyester resin stretch molded articles of this invention can be conducted to heat setting depending on the usage.

Stretch laminated molding articles of this invention have excellent mechanical strength, transparency and gas barrier properties. In particular, when the stretch laminated molding article is a film and it is used as a coating of electric parts, electronic parts, and metallic parts, it is effective in protecting electric/electronic circuits or preventing corrosion of metallic parts. Stretch laminated films are very useful for coating materials for capacitors, motors, transformers and electric wire. The stretch laminated films can also be used as films for packing.food Since the above-mentioned stretch laminated molding articles have good gas barrier properties, they can be used as containers for food and carbonated drinks.

Preforms for the first and second polyester resin multi-layer blow molded articles of the present invention are formed from the first and second polyester resin laminated molding articles of this invention.

Such preforms for multi-layer blow molded articles can be formed by a conventionally known process. For example, the preforms of this invention for polyester resin multi-layer blow molded articles can be obtained by tubularly molding the above-mentioned polyester resin laminated articles.

The first and second polyester resin multi-layer laminated blow molding articles of this invention can be produced, for example, by stretch blow molding the above-mentioned preform for a multi-layer blow molded article.

The multi-layer stretch blow molded articles of this invention may be either uniaxially stretch molded articles or biaxially stretch molded articles. In the present invention,their mechanical strength and gas barrier properties can be improved by producing them by a biaxial stretch molding process.

In the present invention, multi-layer stretch blow molded articles can be produced by stretch blow molding a preform for a blow molding article composed of said polyester resin. The following process may be mentioned as an example of the stretch blow molding: longitudinally stretching the above-mentioned preform in the stretching temperature range of the above-mentioned laminated molding article, and transversly stretching the preform by blow molding (biaxial stretch blow molding process).

Since the polyester resin multi-layer blow molded articles of this invention are excellent in mechanical strength, transparency, and gas barrier properties, they can be used for various purposes. In particular, biaxially stretch blow molded containers of this invention are excellent in gas barrier properties, and therefore they can be used not only as containers for seasonings, oil, alcoholic beverages, cosmetics and detergents, but also as those for sparkling drinks including beer, cola and carbonated water. That is, containers for sparkling drinks prepared from the stretch blow molded articles of this invention may extend the effective period of the contents without increasing the wall thickness thereof, whereas similar conventional containers used have a greater thickness.

## EFFECT OF THE INVENTION

The present invention provides novel cocondensation polyesters.

The cocondensation polyesters themselves have excellent gas barrier properties, and in addition they can impart excellent gas barrier properties to other thermoplastic resins without impairing excellent properties thereof when used in combination with the other thermoplastic resins.

The cocondensation polyesters are excellent in not only gas barrier properties but also melt moldability, mechanical strength, etc.

Further, the cocondensation polyesters can be easily prepared by utilizing cocondensation reaction of components capable of forming each constituent units thereof.

The polyester resin compositions of the present invention comprise a specific cocondensation polyester and polyalkylene terephthalate as described above, and therefore they are significantly excellent in thermal stability and, in addition, gas barrier properties for oxygen and carbon dioxide. Furthermore, the polyester resin compositions of the present invention have excellent melt moldability and stretchability, in addition to excellent gas barrier properties and transparency. Accordingly the stretch molded articles, preforms for stretch blow molded articles and stretch blow molded articles of the present invention are excellent in both transparency and gas barrier properties. These molded articles also have excellent mechanical strength.

The polyester resin laminated molding articles, laminated stretch molded articles, preforms for stretch blow molded articles and multi-layer stretch blow molded articles of the present invention comprise a layer comprising the above-described specific cocondesation polyester, and a polyalkylene terephthalate layer. Accordingly they have very good transparency and gas barrier properties, and they also show excellent mechanical strength characteristics.

[Example]

The present invention is illustrated below with reference to examples, but it should be construed that the invention is in no way limited to those examples.

The evaluation of cocondensation polyesters, sheets or films prepared from polyester resin compositions, stretch molded articles prepared from polyester resin compositions, stretch blow molded articles prepared from polyester resin compositions, polyester resin laminated articles, polyester resin stretch laminated molding articles and polyester resin multi-layer blow molded articles were conducted in accordance with the methods as described below.

Method of Evaluation

The compositions of cocondensation polyesters were determined by measuring the N.M.R. spectrum of the resulting cocondensation polyesters.

The intrinsic viscosity $[\eta]$ was measured at 25°C in o-chlorophenol.

The glass transition temperature was measured at a raising rate of 10°C/min by using a differential scanning calorimeter with regard to a resin sample which was prepared by heating the resulting cocondensation polyesters until they had been in the molten flow state and quenching them to room temperature.

The gas barrier properties were evaluated by measuring a coefficient of oxygen permeability at 25°C by an OXTRAN apparatus manufactured by Mocon Co., Ltd. and a coefficient of carbon dioxide permeability at 25°C by a PERMATRAN C-IV apparatus manufactured by Mocon Co., Ltd.

The color shade was measured by using a ND-1001DP differential calorimeter manufactured by Nihon Denshoku Kogyo K.K.

The haze was measured by using a NDH-20D haze meter manufactured by Nihon Denshoku Kogyo K.K.

The confirmation of a substantially linear structure of cocondensation polyesters was made by introducing 1 g of the resulting polyester into 20 ml of o-chlorophenol at 120°C and observing that the cocondensation polyester was completely dissolved and no get fraction was present.

Example 1

Into an autoclave were charged 1994 g of isophthalic acid, 649 g of 2,6-naphthalenedicarboxylic acid, 1117 g of ethylene glycol and 1.33 g of a 20% aqueous solution of tetraethylammonium hydroxide. The reaction was carried out with stirring by heating the content at first at 200°C and a pressure of 2 kg/cm² for about 2 hours, then at 250°C for about 6 hours. During the reaction, produced water was distilled off from the reaction system.

The reaction pressure was then returned to the atmosphere pressure. To the reaction system, was added 2.5 g of a solution of a mixture containing germanium dioxide and a 20% aqueous solution of tetraethylammonium hydroxide in a ratio of 2:8 by weight. After the mixture was stirred for 10 minutes, 13 g of 10% ethylene glycol solution of a mixture consisting of monomethyl phosphate and dimethyl phosphate in a ratio of 5:5 by weight was added thereto.

The mixture was reacted for about 1 hour with stirring by heating at 250°C. The temperature of the

EP 0 394 751 A2

reaction system was raised to 270°C over a period of about one hour, while reducing pressure to about 0.8 mm Hg. Further, the reaction was carried out at 270°C under a pressure of about 0.8 to 0.5 mmHg for about 6 hours. Unreacted ethylene glycol was distilled off from the reaction system to the outside while the reaction was carried out in a manner described above.

During this polycondensation reaction, the viscosity of the reaction product was increased with the lapse of time.

The cocondensation polyester obtained by the polycondensation reaction had an intrinsic viscosity [$\eta$] of 0.76 ml/g.

The cocondensation polyester was composed of 39.5 mol% of isophthalic acid constituent units, 10.5 mol% of 2,6-naphthalenedicarboxylic acid constituent units, 48.4 mol% of ethylene glycol constituent units and 1.6 mol% of diethylene glycol constituent units and had a glass transition temperature of 71.5°C.

It was confirmed that the cocondensation polyester had a substantially linear structure.

The cocondensation polyester was dried at about 55°C under reduced pressure for 20 hours and pressed into a sheet of about 100 μm in thickness.

The gas barrier properties of the pressed sheet were measured. The sheet was found to have a carbon dioxide permeability coefficient of 2.6 ml·mm/m$^2$·day·atm and an oxygen permeability coefficient of 0.6 ml·mm/m$^2$·day·atom.


Example 2

2330 g of dimethyl isophthalate, 733 g of dimethyl naphthalene-2,6-dicarboxylate, 2,048 g of ethylene glycol and 2.14 g of magnesium acetate tetrahydrate were charged into an autoclave. The reaction was carried out with stirring under atmospheric pressure at 80°C for one hour, at 200°C for about 3 hours and then at 220°C for about 5 hours. Methanol formed was distilled off from the reaction system.

A cocondensation polyester was prepared in a similar manner to that of Example 1 except that the above-described starting materials were used and the reaction was carried out in the manner described above.

The resulting cocondensation polyester had an intrinsic viscosity [$\eta$] of 0.78 dl/g. The polycondensate was composed of 39.7 mol% of isophthalic acid constituent units, 10.3 mol% of 2,6-naphthalenedicarboxylic acid constituent units and 49.1 mol% of ethylene glycol constituent units. The cocondensation polyester had a glass transition temperature of 72°C.

It was confirmed that the cocondensation polyester had substantially a linear structure.

The cocondensation polyester was pressed into a sheet of about 100 μm in thickness.

The gas barrier coefficient of the pressed sheet were as follows: a carbon dioxide permeability coefficient of 2.6 ml·mm/m$^2$·day·atm, and an oxygen permeability coefficient of 0.6 ml·mm/m$^2$·day·atm.


Examples 3 to 6

The procedure of Example 1 was repeated except that isophthalic acid, 2,6-naphthalenedicarboxylic acid and ethylene glycol were used in the amounts indicated in Table 1 to prepare a cocondensation polyester.

The intrinsic viscosity, constituent unit compositions and glass transition temperatures of these cocondensation polyesters and the carbon dioxide permeability coefficients of pressed sheets are shown in Table 1.

It was found that the resulting cocondensation polyesters had a substantially linear structure.


Comparative Example 1

The procedure of Example 1 was repeated except that 2118 g of isophthalic acid and 486 g of 2,6-naphthalenedicarboxylic acid were used to prepare a cocondensation polyester.

The intrinsic viscosity, constituent unit composition and glass transition temperature of the cocondensation polyester and the carbon dioxide permeability coefficient of a pressed sheet prepared from the polyester are shown in Table 1.

22

Table 1

| Example | Amount of monomer used | | | Intrinsic viscosity (dl/g) | Physical properties of cocondensation polyester | | | | |
|---|---|---|---|---|---|---|---|---|---|
| | Isophthalic acid (g) | 2,6-Naphthalene dicarboxylic acid (g) | Ethylene glycol (g) | | Composition | | | Glass transition temp. (°C) | $CO_2$ permeability coefficient of pressed sheet (*) |
| | | | | | Isophthalic acid (mol%) | 2,6-Naphthalene dicarboxylic acid (mol%) | Ethylene glycol (mol%) | | |
| 3 | 1869 | 811 | 1117 | 0.75 | 37.2 | 12.8 | 48.1 | 74 | 2.7 |
| 4 | 1744 | 973 | 1117 | 0.75 | 34.7 | 15.3 | 48.5 | 77 | 2.9 |
| 5 | 1495 | 1297 | 1117 | 0.74 | 29.9 | 20.1 | 47.8 | 82 | 3.0 |
| 6 | 1246 | 1621 | 1117 | 0.73 | 24.8 | 25.2 | 48.8 | 87 | 3.2 |
| Comp. Ex. 1 | - | - | - | 0.78 | 42.4 | 7.6 | 48.6 | 69 | 2.6 |

(*): (ml•mm/m$^2$•day•atm)

EP 0 394 751 A2

EP 0 394 751 A2

Comparative Example 2

A polyethylene terephthalate having an intrinsic viscosity of 0.79 dl/g was prepared from terephthalic acid and ethylene glycol by conventional method.

A pressed sheet was prepared in a manner similar to that of Example 1 except for using the polyethylene terephthalate prepared above.

The pressed sheet was found to have a carbon dioxide permeability coefficient of 25 ml$\cdot$mm/m$^2\cdot$day$\cdot$atm and an oxygen permeability coefficient of 4.5 ml$\cdot$mm/m$^2\cdot$day$\cdot$atm.

Examples 7 and 8

The procedure of Example 1 was repeated except that a mononuclear dicarboxylic acid mixture of isophthalic acid and terephthalic acid in the amounts indicated in Table 2 was used in place of isophthalic acid to prepare a cocondensation polyester.

The intrinsic viscosity, constituent unit compositions and glass transition temperatures of the resulting cocondensation polyesters and the carbon dioxide permeability coefficients of the pressed sheets are shown in Table 2.

It was found that the resulting cocondensation polyesters were substantially linear.

24

Table 2

| Example | Amount of monomer used | | Physical properties of cocondensation polyester | | | | | | | |
|---|---|---|---|---|---|---|---|---|---|---|
| | Isophthalic acid (g) | Terephthalic acid (g) | Intrinsic viscosity (dl/g) | Composition | | | | Glass transition temp. ($^\circ$C) | $CO_2$ permeability coefficient of pressed sheet ($ml \cdot mm/m^2 \cdot day \cdot atm$) |
| | | | | Isophthalic acid (mol%) | Terephthalic acid (mol%) | 2,6-Naphthalene dicarboxylic acid (mol%) | Ethylene glycol (mol%) | | |
| 7 | 1794 | 199 | 0.75 | 35.5 | 4.2 | 10.3 | 48.6 | 73 | 4.6 |
| 8 | 1595 | 399 | 0.73 | 31.8 | 7.7 | 10.5 | 48.8 | 74 | 6.5 |

Examples 9 to 11

The procedure of Example 1 was repeated except that 1,1,1-tris(hydroxymethyl)ethane in an amount indicated in Table 3 was used to prepare a cocondensation polyester.

The intrinsic viscosity, constituent unit compositions and glass transition temperatures of the resulting cocondensation polyesters and the carbon dioxide permeability coefficients of the pressed sheets are shown in Table 3.

It was confirmed that the resulting cocondensation polyesters were substantially linear.

Table 3

| Example | Amount of 1,1,1-tris(hydroxymethyl) ethane used (g) | Physical properties of cocondensation polyester | | | | | |
|---|---|---|---|---|---|---|---|
| | | Intrinsic viscosity (dl/g) | Composition | | | Glass transition temp. ($^\circ$C) | $CO_2$ permeability coefficient of pressed sheet (ml$\bullet$mm/m$^2\bullet$day$\bullet$atm) |
| | | | Isophthalic acid (mol%) | 2,6-Naphthalene dicarboxylic acid (mol%) | Ethylene glycol (mol%) | | |
| 9 | 1.8 | 0.81 | 39.3 | 10.7 | 47.5 | 72 | 2.6 |
| 10 | 5.4 | 0.83 | 39.8 | 10.2 | 48.3 | 73 | 2.7 |
| 11 | 18.0 | 0.90 | 42.2 | 10.4 | 47.8 | 76 | 3.0 |

EP 0 394 751 A2

## Examples 12 to 14

The procedure of Example 1 was repeated except that a polyfunctional compound described in Table 4, in an amount indicated in Table 4 was used in place of 1,1,1-tris(hydroxymethyl)ethane to prepare a cocondensation polyester.

The intrinsic viscosity, constituent unit compositions and glass transition temperature of the resulting cocondensation polyesters and the carbon dioxide permeability coefficients of the pressed sheets are shown in Table 4.

It was confirmed that the resulting cocondensation polyesters were substantially linear.

Table 4

| Example | Polyfunctional compound | | Physical properties of cocondensation polyester | | | | | |
|---|---|---|---|---|---|---|---|---|
| | Name | Amount used (g) | Intrinsic viscosity (dl/g) | Composition | | | Glass transition temp. ($^\circ$C) | $CO_2$ permeability coefficient of pressed sheet (ml·mm/m$^2$·day·atm) |
| | | | | Isophthalic acid (mol%) | 2,6-Naphthalene dicarboxylic acid (mol%) | Ethylene glycol (mol%) | | |
| 12 | 1,1,1-tris(hydroxy methyl)propane | 6 | 0.77 | 39.5 | 10.5 | 48.3 | 73 | 2.7 |
| 13 | Glycerin | 4 | 0.76 | 38.8 | 11.2 | 47.5 | 72 | 2.7 |
| 14 | Trimellitic acid | 9 | 0.79 | 39.6 | 10.4 | 48.6 | 76 | 2.8 |

EP 0 394 751 A2

Examples 15 and 16

The procedure of Example 1 was repeated except that a diol component given in Table 5, in an amount indicated in Table 5 was additionally charged when the starting materials were charged to prepare a cocondensation polyester.

The intrinsic viscosity, constituent unit compositions and glass transition temperatures of the resulting cocondensation polyesters and the carbon dioxide permeability coefficients of the pressed sheets are shown in Table 5.

It was confirmed that the resulting cocondensation polyesters were substantially linear.

Table 5

| Example | Diol | | Physical properties of polyester | | | | | | |
|---|---|---|---|---|---|---|---|---|---|
| | Name | Amount used (g) | Intrinsic viscosity (dl/g) | Composition | | | | Glass transition temp. ($^\circ$C) | $CO_2$ permeability coefficient of pressed sheet (ml$\cdot$mm/m$^2\cdot$day$\cdot$-atm) |
| | | | | Isophthalic acid (mol%) | 2,6-Naphthalene dicarboxylic acid (mol%) | Ethylene glycol (mol%) | Glycol (mol%) other than ethylene glycol | | |
| 15 | 1,4-bis(2-hydroxyethoxybenzene) | 446 | 0.75 | 39.3 | 10.7 | 40.6 | 7.4 | 70.5 | 2.4 |
| 16 | 4,4'-bis(2-hydroxyethoxyphenyl)sulfone | 761 | 0.80 | 39.5 | 10.5 | 40.4 | 7.4 | 73 | 2.4 |

EP 0 394 751 A2

Examples 17 and 18

The procedure of Example 1 was repeated except that a 10% ethylene glycol solution of a tertiary amine given in Table 6, in an amount indicated in Table 6 was used in place of the 20% aqueous solution of tetraethylammonium hydroxide, and a phosphorus compound indicated in Table 6, in an amount indicated in Table 6 was used in place of the 10% ethylene glycol solution of the 50/50 mixture of dimethyl phosphate and monomethyl phosphate to prepare a cocondensation polyester.

The intrinsic viscosity, constituent unit compositions and glass transition temperatures of the resulting cocondensation polyesters and the carbon dioxide permeability coefficients of the pressed sheets are shown in Table 6.

It was confirmed that the resulting cocondensation polyesters were substantially linear.

Table 6.

| | Tert. amine | | | Phosphorus compound | |
|---|---|---|---|---|---|
| Example | Name | Amount(g) of 10% ethylene glycol soln. used | | Name | Amount used (g) |
| 17 | triethylamine | 3.3 | | trimethyl phosphate | 0.9 |
| 18 | tri-n-butylamine | 2.7 | | triphenyl phosphate | 2.1 |

Table 6 (continued)

| Example | Intrinsic viscosity (dl/g) | Composition | | | Glass transition temp. ($^\circ$C) | $CO_2$ permeability coefficient of pressed sheet (*) |
|---|---|---|---|---|---|---|
| | | Physical properties of cocondensation polyester | | | | |
| | | Isophthalic acid (mol%) | 2,6-Naphthalene dicarboxylic acid (mol%) | Ethylene glycol (mol%) | | |
| 17 | 0.78 | 39.2 | 10.8 | 48.1 | 71 | 2.7 |
| 18 | 0.82 | 39.5 | 10.5 | 48.4 | 71 | 2.7 |

(*): (ml$\cdot$mm/m$^2\cdot$day $\cdot$atm)

Examples 19 to 21

The procedure of Example 1 was repeated except that a polycondensation catalyst indicated in Table 7, in an amount indicated in Table 7 was used in place of the solution of the mixture of germanium dioxide and a 20% aqueous solution of tetraethylammonium hydroxide in a ratio of 2:8 by weight to prepare a cocondensation polyester.

The intrinsic viscosity, constituent unit compositions and glass transition temperatures of the resulting cocondensation polyesters and the carbon dioxide permeability coefficients of the pressed sheets are shown in Table 7.

It was confirmed that the resulting cocondensation polyesters were substantially linear.

Table 7

| Example | Polycondensation catalyst | | | Physical properties of cocondensation polyester | | | | | |
|---|---|---|---|---|---|---|---|---|---|
| | Name | Amount used (g) | Intrinsic viscosity (dl/g) | Composition | | | Glass transition temp. (°C) | $CO_2$ permeability coefficient of pressed sheet (ml·mm/m²·day·atm) | |
| | | | | Isophthalic acid (mol%) | 2,6-Naphthalene dicarboxylic acid (mol%) | Ethylene glycol (mol%) | | | |
| 19 | Antimony trioxide | 0.525 | 0.79 | 39.5 | 10.5 | 48.6 | 72 | 3.0 | |
| 20 | Titanium tetrabutoxide | 0.613 | 0.77 | 39.6 | 10.4 | 48.7 | 72 | 2.6 | |
| 21 | Titanium (II) oxide acetylacetonate | 0.472 | 0.76 | 39.3 | 10.7 | 48.2 | 71 | 2.8 | |

EP 0 394 751 A2

Examples 22 to to 24 and Comparative Example 3

Each of the cocondensation polyesters obtained in Examples 1, 3 and 7 and Comparative Example 2 was pressed into a sheet having a thickness of 200 μm, thus four types of pressed sheets having been prepared.

Each pressed sheet was stretched simultaneously in the longitudinal (stretch ratio 3 times) and transverse directions (stretch ratio 3 times) in the temperature range of about 75 to 110°C by using a biaxially stretching apparatus to prepare a biaxially oriented film having an average thickness of 20 μm from each cocondensation polyester.

The coefficients of carbon dioxide permeability of these biaxially oriented films are shown in Table 8.

Table 8

| Example | Cocondensation polyester used for stretching | $CO_2$ permeability coefficient of biaxially oriented film (ml·mm/m²·day·atm) |
|---|---|---|
| 22 | Cocondensation polyester of Comp. Ex. 1 | 1.7 |
| 23 | Cocondensation polyester of Ex. 3 | 1.8 |
| 24 | Cocondensation polyester of Ex. 7 | 3.1 |
| Comp. Ex. 3 | Cocondensation polyester of Comp.Ex. 2 | 16 |

Example 25

The cocondensation polyester prepared in Example 1 by using isophthalic acid, 2,6-naphthalenedicarboxylic acid and ethylene glycol as the starting materials was extruded at about 240°C through an extruder equipped with a T-die to obtain an extruded sheet having a thickness of 200 μm. The extruded sheet was stretched at a temperature of 75 to 110°C first in the longitudinal direction (parallel to extrusion flow, stretch ratio 3 times) and then in the transverse direction (perpendicular to extrusion flow, stretch ratio 3 times) by using a biaxial stretching apparatus to prepare a biaxially oriented film having a thickness of about 22 μm. The carbon dioxide permeability coefficient of the biaxially oriented film was 1.7 ml·mm/m²·day·atm.

Example 26

The pressed sheet having a thickness of about 150 μm of the cocondensation polyester prepared in Example 1 by using isophthalic acid, 2,6-naphthalenedicarboxylic acid and ethylene glycol as the starting materials, was laminated by pressing with the pressed sheet having a thickness of about 150 μm of polyethylene terephthalate prepared in Comparative Example 2. The laminate 150 μm thick was press-molded to prepare a multi-layer pressed sheet having a thickness of 150 μm.

The laminate 150 μm thick (multi-layer pressed sheet) had good adhesion between the cocondensation polyester layer and the polyethylene terephthalate layer.

The multi-layer pressed sheet was biaxially stretched under the same conditions as those of Example 22 to prepare a biaxially oriented film having an average thickness of 18 μm.

Both the cocondensation polyester layer of the biaxially oriented film and the polyethylene terephthalate layer thereof were each about 9 μm thick, and hence it was confirmed that both layers were biaxially oriented uniformly.

The adhesion between the two layers thereof was good. The biaxially oriented film had a carbon dioxide permeability coefficient of 1.8 ml·mm/m²·day·atm.

36

Example 101

748 g of isophthalic acid, 1621 g of 2,6-naphthalenedicarboxylic acid, 354 g of succinic acid, 1117 g of ethylene glycol and 1.33 g of a 20% aqueous solution of tetraethylammonium hydroxide were charged into an autoclave. The reaction was carried out with stirring under a pressure of 2 kg/cm$^2$ and heating at 200°C for about 2 hours. The reaction was then continued with stirring at 250°C for about 4 hours. Water formed in the course of the reaction was distilled off from the reaction system to the outside.

The reaction pressure was returned to ordinary pressure, and 2.5 g of a solution of a mixture containing germanium dioxide and a 20% aqueous solution of tetraethylammonium hydroxide in a ratio of 2:8 by weight was added to the reaction mixture. After the mixture was stirred for 10 minutes, 13 g of a 10% ethylene glycol solution of a mixture consisting of monomethyl phosphate and dimethyl phosphate was added thereto.

The mixture was heated to 250°C and reacted with stirring for about one hour. Further, the temperature of the reaction system was raised to 270°C over a period of about one hour, while the pressure of the reaction system was reduced to about 0.8 mmHg. The reaction was carried out at 270°C under a pressure of about 0.8 to 0.5 mmHg for about 6 hours. Unreacted ethylene glycol was distilled off from the reaction system to the outside while the reaction was conducted in the manner described above.

During this polycondensation reaction, the viscosity of the reaction product increased with the lapse of time.

The resulting polyester comprising isophthalic acid constituent units, 2,6-naphthalenedicarboxylic acid constituent units, succinic acid constituent units and ethylene glycol constituent units obtained by the polycondensation reaction had an intrinsic viscosity of 0.85 dl/g. The polycondensate had a composition composed of 14.5 mol% of isophthalic acid constituent units, 26.0 mol% of 2,6-naphthalenedicarboxylic acid constituent units, 9.5 mol% of succinic acid constituent units, 48.2 mol% of ethylene glycol constituent units and 1.8 mol% of diethylene glycol constituent units. The cocondensation polyester had a glass transition temperature of 75°C.

The cocondensation polyester was dried at about 55°C under reduced pressure for 20 hours, and then pressed into a sheet having a thickness of about 100 μm.

The gas barrier properties of the pressed sheet were measured. The pressed sheet was found to have a carbon dioxide permeability coefficient of 2.6 ml•mm/m$^2$•day•atm and an oxygen gas permeability coefficient of 0.5 ml•mm/m$^2$•day•atm.


Examples 102 to 106

The procedure of Example 101 was repeated except that isophthalic acid, 2,6-naphthalenedicarboxylic acid, succinic acid and ethylene glycol in the amounts indicated in Table 9 were used to prepare a cocondensation polyester.

The intrinsic viscosity, constituent unit compositions and glass transition temperatures of the resulting cocondensation polyesters and the carbon dioxide permeability coefficients of the press sheets are shown in Table 9.

Table 9

| Example | Amount of monomer used | | | | Physical properties of cocondensation polyester | | | | | | | |
|---|---|---|---|---|---|---|---|---|---|---|---|---|
| | Isophthalic acid (g) | 2,6-Naphthalene dicarboxylic acid (g) | Succinic acid (g) | Ethylene glycol (g) | Intrinsic viscosity (dl/g) | Composition | | | | | Glass transition temp. ($^\circ$C) | $CO_2$ permiability coefficient of pressed sheet (ml·mm/m$^2$·da.y·atm) |
| | | | | | | Isophthalic acid (mol%) | 2,6-Naphthalene dicarboxylic acid (mol%) | Succinic acid (mol%) | Ethylene glycol (mol%) | | | |
| 102 | 1869 | 649 | 89 | 1117 | 0.78 | 37.3 | 10.3 | 2.4 | 48.3 | | 68 | 2.5 |
| 103 | 1246 | 1297 | 177 | 1117 | 0.81 | 24.8 | 20.3 | 4.9 | 47.8 | | 76 | 2.6 |
| 104 | 1246 | 973 | 354 | 1117 | 0.77 | 24.8 | 15.3 | 9.9 | 48.3 | | 65 | 2.5 |
| 105 | 748 | 1297 | 531 | 1117 | 0.81 | 14.8 | 20.6 | 14.6 | 47.9 | | 64 | 2.4 |
| 106 | 125 | 1621 | 797 | 1117 | 0.83 | 2.5 | 25.3 | 22.2 | 47.6 | | 60 | 2.4 |

EP 0 394 751 A2

Comparative Example 101

Polyethylene terephthalate having an intrinsic viscosity of 0.79 dl/g was synthesized from terephthalic acid and ethylene glycol by conventional method.

Polyethylene terephthalate was pressed into a sheet in a manner similar to that of Example 101.

The pressed sheet was found to have a carbon dioxide permeability coefficient of 25 ml·mm/m²·day·atm and an oxygen permeability coefficient of 4.5 ml·mm/m²·day·atm.


Comparative Example 102

Esterification reaction and polycondensation reaction were carried out by a procedure similar to that of Example 101 except that 2569 g of isophthalic acid, 32 g of 2,6-napthalenedicarboxylic acid and 9 g of succinic acid were used.

As a result, in the latter stage of the polycondensation reaction, a large amount of sublimates containing mainly a cyclic oligomer of isophthalic acid and ethylene glycol deposited on the internal wall of the autoclave and on a distilling tube. The amount thereof accounted for about 15% of the esterified product.

Further, the sublimate sometimes clogged the distilling tube. Hence, the reaction had to be carried out with great care.

The thus-obtained cocondensation polyester had an intrinsic viscosity of 0.80 dl/g, and was composed of 48.4 mol% of isophthalic acid constituent units, 1.2 mol% of 2,6-naphthalenedicarboxylic acid constituent units, 0.4 mol% of succinic acid constituent units, 47.7 mol% of ethylene glycol constituent units and 2.3 mol% of diethylene glycol constituent units. The cocondensation polyester had a glass transition temperature of 63°C.


Examples 107 and 108 and Comparative Example 103

The procedure of Example 101 was repeated except that mixtures of isophthalic acid and terephthalic acid in amounts indicated in Table 10 were used in place of isophthalic acid to prepare cocondensation polyesters.

The intrinsic viscosity, constituent unit compositions and glass transition temperatures of the resulting cocondensation polyesters and the carbon dioxide permeability coefficients of the pressed sheets are shown in Table 10.

It is apparent from Table 10 that the cocondensation polyester of Comparative Example 103 wherein the composition amount of isophthalic acid constituent units is smaller than that of terephthalic acid constituent units has a high coefficient of carbon dioxide permeability in comparison with that of the polyesters of the Examples 107 and 108.

Table 10

| Example | Amount of monomer used | | Physical properties of cocondensation polyester | | | | | | | Glass transition temp. (°C) | $CO_2$ permeability coefficient of pressed sheet $(ml \cdot mm/m^2 \cdot day. \cdot atom)$ |
|---|---|---|---|---|---|---|---|---|---|---|---|
| | Isophthalic acid (g) | Terephthalic acid (g) | Intrinsic viscosity (dl/g) | Composition | | | | | | | |
| | | | | Isophthalic acid (mol%) | Terephthalic acid (mol%) | 2,6-Naphthalene dicarboxylic acid (mol%) | Succinic and (mol%) | Ethylene glycol (mol%) | | | |
| 107 | 673 | 75 | 0.82 | 13.2 | 1.3 | 25.8 | 9.7 | 48.3 | | 76 | 3.3 |
| 108 | 598 | 150 | 0.82 | 11.8 | 2.9 | 25.5 | 9.8 | 48.5 | | 76 | 4.0 |
| Comp.Ex. 103 | 224 | 523 | 0.85 | 4.5 | 10.4 | 25.7 | 9.4 | 48.1 | | 79 | 7.5 |

EP 0 394 751 A2

Examples 109 to 111

The procedure of Example 104 was repeated except that 1,1,1-tris(hydroxymethyl)ethane in amounts indicated in Table 11 was used to prepare a cocondensation polyester.

The intrinsic viscosity, constituent unit compositions and glass transition temperatures of the resulting cocondensation polyesters and the carbon dioxide permeability coefficients of the pressed sheets are shown in Table 11.

Table 11

| Example | Amount of 1,1,1-tris(hydroxymethyl)ethane used (g) | Intrinsic viscosity (dl/g) | Physical properties of cocondensation polyester | | | | | |
|---|---|---|---|---|---|---|---|---|
| | | | Composition | | | | Glass transition temp. ($^\circ$C) | $CO_2$ permeability coefficient of pressed sheet (ml$\cdot$mm/m$^2\cdot$day$\cdot$atm) |
| | | | Isophthalic acid (mol%) | 2,6-Naphthalene dicarboxylic acid (mol%) | Succinic acid (mol%) | Ethylene glycol (mol%) | | |
| 109 | 1.8 | 0.78 | 24.9 | 15.2 | 9.9 | 48.3 | 65 | 2.5 |
| 110 | 5.4 | 0.80 | 24.7 | 15.4 | 9.9 | 48.5 | 67 | 2.6 |
| 111 | 18 | 0.92 | 24.8 | 15.0 | 10.2 | 48.8 | 71 | 2.9 |

EP 0 394 751 A2

Example 112

Into an autoclave, were charged 583 g of dimethyl isophthalate, 1221 g of dimethyl naphthalene-2,6-dicarboxylate, 292 g of dimethyl succinate, 1366 g of ethylene glycol and 2.14 g of magnesium acetate tetrahydrate. The reaction was carried out with stirring under atmospheric pressure at 180°C for about one hour, at 200°C for about 3 hours and then at 220°C for about 5 hours. Methanol formed in the course of the reaction was distilled off from the reaction system.

A cocondensation polyester was prepared by a procedure similar to that of Example 101 except that the above-described ester exchange reaction was conducted.

The thus-obtained cocondensation polyester had an intrinsic viscosity of 0.87 dl/g.

The polycondensate was composed of 14.8 mol% of isophthalic acid constituent units, 25.3 mol% of 2,6-naphthalenedicarboxylic acid constituent units, 9.9 mol% of succinic acid constituent units, 48.8 mol% of ethylene glycol constituent units and 1.2 mol% of diethylene glycol constituent units. The cocondensation polyester had a glass transition temperature of 75°C.

The pressed sheet having a thickness of about 100 μm, prepared from the cocondensation polyester had a carbon dioxide permeability coefficient of 2.5 ml•mm/m²•day•atm and an oxygen permeability coefficient of 0.5 ml•mm/m²•day•atm.


Comparative Example 104

An attempt was made to prepare a cocondensation polyester by the same procedure as that of Example 104 except that 1,1,1-tris(hydroxymethyl)ethane in an amount of 54 g was used.

In the latter stage of the polycondensation reaction, the viscosity of the reaction system greatly increased. After the viscosity increase, the resulting cocondensation polyester no longer showed fluidity.


Examples 113 to 115

The procedure of Example 104 was repeated except that polyfunctional compounds indicated in Table 12, in amounts indicated in Table 12 were used in place of 1,1,1-tris(hydroxymethyl)ethane to prepare cocondensation polyesters.

The intrinsic viscosity, constituent unit compositions and glass transition temperatures of the resulting cocondensation polyesters and the carbon dioxide permeability coefficients of the pressed sheets are shown in Table 12.

43

Table 12

| Example | Polyfunctional compound | | Intrinsic viscosity (dl/g) | Physical properties of cocondensation polyester | | | | | | |
|---|---|---|---|---|---|---|---|---|---|---|
| | Name | Amount used (g) | | Composition | | | | Glass transition temp. ($^\circ$C) | $CO_2$ permeability coefficient of pressed sheet (ml$\cdot$mm/m$^2\cdot$da. y$\cdot$atm) | |
| | | | | Isophthalic acid (mol%) | 2,6-Naphthalene dicarboxylic acid (mol%) | Succinic acid (mol%) | Ethylene glycol (mol%) | | | |
| 113 | 1,1,1-tris(hydroxymethyl) ethane | 6 | 0.85 | 24.8 | 15.3 | 9.9 | 48.3 | 66 | 2.5 | |
| 114 | Glycerin | 4 | 0.78 | 24.6 | 15.5 | 9.9 | 47.8 | 64 | 2.6 | |
| 115 | Trimellitic acid | 9 | 0.93 | 24.8 | 15.3 | 9.9 | 48.5 | 68 | 2.5 | |

EP 0 394 751 A2

Examples 116 and 117

The procedure of Example 104 was repeated except that diol compounds indicated in Table 13 in amounts indicated in Table 13 were additionally charged to prepare cocondensation polyesters.

The intrinsic viscosity, constituent unit compositions and glass transition temperatures of the resulting cocondensation polyesters and the carbon dioxide permeability coefficients of the pressed sheets are shown in Table 13.

Table 13

| Example | Diol | | | Physical properties of cocondensation polyester | | | | | | | |
| --- | --- | --- | --- | --- | --- | --- | --- | --- | --- | --- | --- |
| | Name | Amount used (g) | Intrinsic viscosity (dl/g) | Composition | | | | | | Glass transition temp. ($^\circ$C) | $CO^2$ permeability coefficient of pressed sheet (ml•mm/m²•day.•atom) |
| | | | | Isophthalic acid (mol%) | 2,6-Naphthalene dicarboxylic acid (mol%) | Succinic acid (mol%) | Ethylene glycol (mol%) | Glycol other than ethylene glycol (mol%) | | | |
| 116 | 1,4-bis(2-hydroxyethoxy) benzene | 594 | 0.76 | 24.9 | 15.3 | 9.8 | 38.2 | 9.6 | | 63 | 2.3 |
| 117 | 1,4'-bis(2-hydroxy-ethoxypheny)sulfo-ne | 1014 | 0.75 | 24.8 | 15.3 | 9.9 | 37.6 | 9.8 | | 70 | 2.8 |

EP 0 394 751 A2

EP 0 394 751 A2

Examples 118 and 119

The procedure of Example 104 was repeated except that 10% ethylene glycol solutions of tert. amines indicated in Table 14, in amounts indicated in Table 14 were used in place of the 20% aqueous solution of tetraethylammonium hydroxide, and that phosphorus compounds indicated in Table 14 in amounts indicated in Table 14 were used in place of the 10% ethylene glycol solution of the 50:50 mixture of dimethyl phosphate and monomethyl phosphate to prepare cocondensation polyesters.

The intrinsic viscosity, constituent unit compositions and glass transition temperatures of the resulting cocondensation polyesters and the carbon dioxide permeability coefficients of the pressed sheets are shown in Table 14.

Table 14

| Example | Tert. amine | | Phosphorus compound | |
|---|---|---|---|---|
| | Name | Amount of 10% ethylene glycol solution(g) used | Name | Amount (g) used |
| 118 | tri-n-butylamine | 3.3 | trimethyl phosphate | 0.9 |
| 119 | triethylamine | 2.7 | triphenyl phosphate | 2.1 |

47

Table 14 (continued)

| Example | Intrinsic viscosity (dl/g) | Physical properties of cocondensation polyester | | | | Glass transition temp. ($^{\circ}$C) | $CO_2$ permeability coefficient of pressed sheet (*) |
|---|---|---|---|---|---|---|---|
| | | Composition | | | | | |
| | | Isophthalic acid (mol%) | 2,6-Naphthalene dicarboxylic acid (mol%) | Succinic acid (mol%) | Ethylene glycol (mol%) | | |
| 118 | 0.75 | 24.7 | 15.2 | 10.1 | 48.3 | 65 | 2.5 |
| 119 | 0.78 | 24.9 | 15.3 | 9.8 | 48.7 | 64 | 2.5 |

(*): (ml•mm/m$^2$•day, •atm)

Examples <u>120</u> to <u>122</u>

The procedure of Example 104 was repeated except that polycondensation catalysts indicated in Table 15 in amounts indicated in Table 15 were used in place of the 20% aqueous solution of the mixture containing germanium dioxide and the 20% aqueous solution of tetraethylammonium hydroxide in a ratio of 2:8 by weight to prepare a cocondensation polyester.

The intrinsic viscosity, constituent unit compositions and glass transition temperatures of the resulting cocondensation polyesters and the carbon dioxide permeability coefficients of the pressed sheets are shown in Table 15.

Table 15

| Example | Polycondensation catalyst | | Physical properties of cocondensation polyester | | | | | | | |
|---|---|---|---|---|---|---|---|---|---|---|
| | Name | Amount used (g) | Intrinsic viscosity (dl/g) | Composition | | | | Glass transition temp. ($^\circ$C) | $CO_2$ permeability coefficient of pressed sheet (ml·mm/m$^2$·day·atm) | |
| | | | | Isophthalic acid (mol%) | 2,6-Naphthalene dicarboxylic acid (mol%) | Succinic acid (mol%) | Ethylene glycol (mol%) | | | |
| 120 | Antimony trioxide | 0.525 | 0.81 | 24.9 | 14.9 | 10.2 | 48.8 | 66 | 2.5 | |
| 121 | Titanium tetrabutoxide | 0.613 | 0.78 | 24.8 | 15.4 | 9.8 | 48.3 | 64 | 2.4 | |
| 122 | Titanium (II) oxide acetylacetonate | 0.472 | 0.74 | 24.9 | 15.2 | 9.9 | 47.9 | 63 | 2.6 | |

EP 0 394 751 A2

Examples 123 to 125 and Comparative Example 105

Each of the cocondensation polyesters prepared in Examples 101, 102 and 104 and Comparative Example 101 was pressed into a sheet having a thickness of 200 $\mu$m.

Each of the pressed sheets was stretched at a temperature of about 75 to 110°C simultaneously in the longitudinal (stretch ratio 3 times) and transverse directions (stretch ratio 3 times) by using a biaxial stretching apparatus to prepare a biaxially oriented film having an average thickness of 20 $\mu$m.

The carbon dioxide permeability coefficients of the resulting biaxially oriented films are shown in Table 16.

Table 16

| Example | Cocondensation polyester used for stretching | $CO_2$ permeability coefficient of biaxially oriented film (ml$\cdot$mm/m$^2\cdot$day$\cdot$atm) |
|---|---|---|
| 123 | Cocondensation polyester of Ex. 101 | 1.6 |
| 124 | Cocondensation polyester of Ex. 102 | 1.3 |
| 125 | Cocondensation polyester of Ex. 104 | 1.5 |
| Comp. Ex.105 | Cocondensation polyester of Comp. Ex. 101 | 16 |

Example 126

The cocondensation polyester prepared by using isophthalic acid, 2,6-naphthalenedicarboxylic acid, succinic acid and ethylene glycol as the starting materials in Example 104 was extruded through an extruder equipped with a T-die at about 240°C to prepare an extruded sheet having a thickness of 200 $\mu$m.

The extruded sheet was stretched in the longitudinal direction (parallel to the extrusion flow, stretch ratio 3 times) and then in the transverse direction (perpendicular to the extrusion flow, stretch ratio 3 times) at a temperature of about 75 to 110°C by using a biaxial stretching apparatus to prepare a biaxially oriented film having a thickness of about 22 $\mu$m.

The biaxially oriented film had a coefficient of carbon dioxide permeability of 1.5 ml$\cdot$mm/m$^2\cdot$day$\cdot$atm.

Example 127

The pressed sheet having a thickness of about 150 $\mu$m, composed of the cocondensation polyester prepared by using isophthalic acid, 2,6-naphthalenedicarboxylic acid, succinic acid and ethylene glycol as the starting materials in Example 104, was laminated with the pressed sheet having a thickness of about 150 $\mu$m, composed of polyethylene terephthalate prepared in Comparative Example 101. The resulting laminate was pressed into a multi-layer pressed sheet having a thickness of 150 $\mu$m.

The adhesion between the cocondensation polyester layer and the polyethylene terephthalate layer in the multi-layer pressed sheet was good. The multi-layer pressed sheet was biaxially stretched under the same conditions as in Example 123 to prepare a biaxially oriented film having an average thickness of 18 $\mu$m.

Both the cocondensation polyester layer of the biaxially oriented film and the polyethylene terephthalate layer thereof had a thickness of about 9 $\mu$m. Hence, it was confirmed that the cocondensation polyester layer as well as the polyethylene terephthalate layer were uniformly stretched.

Further, the adhesion between the cocondensation polyester layer and the polyethylene terephthalate layer in the biaxially oriented film was good. The biaxially oriented film was found to have a coefficient of carbon dioxide permeability of 1.6 ml$\cdot$mm/m$^2\cdot$day$\cdot$atm.

Examples 128 to 131

The procedure of Example 101 was repeated except that the amounts of isophthalic acid, 2,6-naphthalenedicarboxylic acid and succinic acid used were changed to those indicated in Table 17 to obtain a cocondensation polyester.

The intrinsic viscosity [h], constituent unit compositions and glass transition temperatures of the resulting cocondensation polyesters and the carbon dioxide permeability coefficients of the pressed sheets are shown in Table 17.

Table 17

| Example | Amount of monomer used | | | | Physical properties of cocondensation polyester | | | | | | | |
|---|---|---|---|---|---|---|---|---|---|---|---|---|
| | Isophthalic acid (g) | 2,6-Naphthalene dicarboxylic acid (g) | Succinic acid (g) | Ethylene glycol (g) | Intrinsic viscosity (dl/g) | Composition | | | | | Glass transition temp. ($^{\circ}$C) | $CO_2$ permeability coefficient of pressed sheet (*) |
| | | | | | | Isophthalic acid (mol%) | 2,6-Naphthalene dicarboxylic acid (mol%) | Succinic acid (mol%) | Ethylene glycol (mol%) | | | |
| 128 | 1869 | 486 | 177 | 1117 | 0.83 | 37.3 | 7.8 | 4.9 | 48.2 | | 63 | 2.5 |
| 129 | 2118 | 324 | 89 | 1117 | 0.80 | 42.4 | 5.2 | 2.4 | 48.3 | | 63 | 2.5 |
| 130 | 1620 | 649 | 266 | 1117 | 0.77 | 32.4 | 10.2 | 7.4 | 47.3 | | 62 | 2.4 |
| 131 | 1371 | 811 | 354 | 1117 | 0.75 | 27.3 | 12.8 | 9.9 | 48.3 | | 62 | 2.5 |

(*): (ml $\cdot$ mm/m$^2$ $\cdot$ day $\cdot$ atm)

EP 0 394 751 A2

Example 27

A blend polymer was prepared by mixing 100 parts by weight of polyethylene terephthalate (MITSUI PET J 125, a product of Mitsui Pet Resin KK) dried at 150°C for 10 hours with 10 parts by weight of the cocondensation polyester of Example 1 dried in vacuo at 50°C for 20 hours. The blend polymer was melt-extruded through an extruder at a temperature of about 250 to 290°C. After cooling the extrudate, it was cut to obtain pellets having a composition composed of polyethylene terephthalate and the cocondensation polyester.

The pellets were press molded into a pressed sheet having a thickness of about 100 $\mu$m.

The pressed sheet was colorless. The mechanical properties of the pressed sheet were measured. The pressed sheet was found to have a tensile rupture strength of 490 kg/cm$^2$ and tensile elongation of 85%. Further, the gas barrier properties of the pressed sheet were measured. The pressed sheet was found to have a carbon dioxide permeability coefficient of 13.7 ml$\cdot$mm/m$^2$$\cdot$day$\cdot$atm and an oxygen permeability coefficient of 3.2 ml$\cdot$mm/m$^2$$\cdot$day$\cdot$atm.

The pressed sheet was stretched simultaneously in the longitudinal (stretch ratio 3 times) and transverse directions (stretch ratio 3 times) with a biaxial stretching apparatus to prepare a biaxially oriented film.

The resulting biaxially oriented film had a thickness of about 11 $\mu$m, and was uniformly stretched with less unevenness in thickness. The mechanical properties of the biaxially oriented film were measured. The film was found to have a tensile rupture strength of 1570 kg/cm$^2$, tensile elongation of 54% and tensile modulus of 45000 kg/cm$^2$. The oriented film was found to have a carbon dioxide permeability coefficient of 9.0 ml$\cdot$mm/m$^2$$\cdot$day$\cdot$atm.

Examples 28 to 34

The procedure of Example 27 was repeated except that compositions prepared by using polyethylene terephthalate or cocondensation polyesters as indicated in Table 18 in proportions as indicated in Table 18 were used in place of polyethylene terephthalate or cocondensation polyester used in Example 27 to prepare pressed sheets having a thickness of 100 $\mu$m.

The mechanical properties and carbon dioxide permeability coefficients of the resulting pressed sheets are shown in Table 18.

Each pressed sheet was biaxially stretched simultaneously in the longitudinal(stretch ratio 3 times) and transverse directions (stretch ratio 3 times) by the same procedure as in Example 27 to prepare a biaxially oriented film.

The resulting biaxially oriented films had an average thickness given in Table 18, and were all uniformly stretched. The mechanical properties and carbon dioxide permeability coefficients of the biaxially oriented films are shown in Table 18.

54

Table 18

| | Constituent of composition | | | Physical properties of pressed sheet | | | | Physical properties of biaxially oriented film | | | | |
|---|---|---|---|---|---|---|---|---|---|---|---|---|
| | Polyethylene terephthalate (note 1) | Cocondensation polyester | Amount of cocondensation polyester per 100 parts of polyethylene terephthalate (by weight) | Tensile break strength (kg/cm$^2$) | Tensile elongation (%) | CO$_2$ Permeability coefficient (*) | Average thickness (µm) | Tensile break strength (kg/cm$^2$) | Tensile elongation (%) | Tensile modulus (kg/cm$^2$) | CO$^2$ permeability coefficient (*) |
| Ex. 28 | Mitsui PET J-135 | Ex. 1 | 20 | 500 | 82 | 9.3 | 11 | 1590 | 54 | 44000 | 6.0 |
| Ex. 29 | Mitsui PET J-135 | Ex. 1 | 40 | 520 | 78 | 5.7 | 11 | 1600 | 52 | 42000 | 3.7 |
| Ex. 30 | Mitsui PET J-135 | Ex. 7 | 20 | 490 | 80 | 13.5 | 11 | 1570 | 54 | 43000 | 9.5 |
| Ex. 31 | Mitsui PET J-135 | Ex. 9 | 10 | 490 | 81 | 13.7 | 11 | 1560 | 52 | 45000 | 9.5 |
| Ex. 32 | Mitsui PET J-125 | Ex. 15 | 10 | 480 | 83 | 13.1 | 11 | 1570 | 55 | 45000 | 8.5 |
| Ex. 33 | Mitsui PET J-125 | Ex. 17 | 10 | 480 | 80 | 13.8 | 11 | 1560 | 52 | 44000 | 9.1 |
| Ex. 34 | Mitsui PET J-125 | Ex. 20 | 10 | 490 | 83 | 13.8 | 11 | 1560 | 53 | 45000 | 9.0 |

(Note 1) Product of Mitsui Pet Resin KK

(*) ml•mm/m²•day•atm

Comparative Example 4

Polyethylene terephthalate of Example 27 was press molded into a pressed sheet having a thickness of 100 $\mu$m.

The pressed had the following mechanical properties: tensile rupture strength of 480 $kg/cm^2$, and tensile elongation of 82%. With regard to gas barrier properties, the sheet had a carbon dioxide permeability coefficient of 24 ml$\cdot$mm/m$^2\cdot$day$\cdot$atm.

The pressed sheet was biaxially stretched simultaneously in the longitudinal (stretch ratio 3 times) and transverse directions (stretch ratio 3 times) by the same procedure as in Example 27 to prepare a biaxially oriented film.

The biaxially had the following mechanical properties: tensile rupture strength of 1550 $kg/cm^2$, tensile elongation of 55%, and tensile modulus of 46000 $kg/cm^2$. The biaxially oriented film had a carbon dioxide permeability coefficient of 15 ml$\cdot$mm/m$^2\cdot$day$\cdot$atm.

Example 35

The mixture of polyethylene terephthalate and cocondensation polyester prepared in Example 28 was extruded through an extruder equipped with a T-die at a barrel temperature of about 160 to 180$^\circ$C to obtain an extruded sheet having a thickness of about 80 $\mu$m.

The extruded sheet had the following mechanical properties: a tensile rupture strength of 510 $kg/cm^2$ (direction of flow) to 460 $kg/cm^2$ (perpendicular to direction of flow), and tensile elongation of 85% (direction of flow) to 77% (perpendicular to direction of flow). The sheet had a carbon dioxide permeability coefficient of 9.0 ml$\cdot$mm/m$^2\cdot$day$\cdot$atm.

The extruded sheet was stretched at a temperature of about 80 to 110$^\circ$C in the transverse direction (perpendicular to the flow, stretch ratio twice) and then three in the longitudinal direction (direction of the flow, stretch ratio 3 times) with a biaxial stretching apparatus to prepare a biaxially oriented film having an average thickness of about 13 $\mu$m.

The biaxially oriented film composed of the above-described composition was had the following mechanical properties: tensile rupture strength of 1660 $kg/cm^2$ (direction of the flow) to 1540 $kg/cm^2$ (perpendicular to direction of the flow), tensile elongation 50% (direction of the flow), and tensile modulus of 51000 $kg/cm^2$ (direction of the flow) to 46000 $kg/cm^2$ (perpendicular to direction of the flow). The film had a carbon dioxide permeability coefficient of 5.4 ml$\cdot$mm/m$^2\cdot$day$\cdot$atm.

Example 36

The mixture of polyethylene terephthalate and cocondensation polyester prepared in Example 28 was injection molded at a molding temperature of 270$^\circ$C by an injection molding machine to prepare a preform (cold parison) having a thickness of 3.2 mm. The preform was biaxially stretched in the longitudinal direction (strech ratio about 2.5 times) and in the transverse direction (stretch ratio about 4 times) by using a biaxial stretch blow molding machine to form a stretched bottle having an inner capacity of about 1 liter.

The stretched bottle was had a carbon dioxide permeability coefficient of 1.1 ml/day$\cdot$bottle$\cdot$atm.

Example 37

The mixture of polyethylene terephthalate and cocondensation polyester prepared by Example 27 was injection molded at a molding temperature of about 270$^\circ$C by an injection molding machine to prepare a preform (cold parison) having a thickness of 3.2 mm. The preform was biaxially stretched in the longitudinal direction (stretch ratio about 2.5 times) and in the transverse direction (stretch ratio about 4 times) by a biaxial stretch blow molding machine to prepare a stretched bottle having an inner capacity of about 1 liter.

The stretched bottle had a carbon dioxide permeability coefficient of 2.1 ml/day$\cdot$bottle$\cdot$atm.

Comparative Example 5

Polyethylene terephthalate used in Example 27 was injection molded to prepare a preform composed of the polyethylene terephthalate layer alone having the same thickness (about 3.2 mm) as that of the preform of Example 36. The preform was stretch blow molded by the same procedure as in Example 36 to prepare a stretched bottle having an inner capacity of about 1 liter.

The resulting stretched bottle had a carbon dioxide permeability coefficient of 4.0 ml/day•bottle•atm.

Example 132

A blend polymer was prepared by mixing 100 parts by weight of polyethylene terephthalate (MITSUI PET J 125, a product of Mitsui Pet Resin KK) dried at 150°C for 10 hours with 10 parts by weight of the cocondensation polyester of Example 101 dried in vacuo at 50°C for 20 hours. The blend polymer was melt-extruded through an extruder at a molding temperature of about 250 to 290°C. After cooling the extrudate, it was cut to prepare pellets composed of a composition of polyethylene terephthalate and cocondensation polyester.

The pellets were press-molded into a pressed sheet having a thickness of about 100 $\mu$m.

The resulting pressed sheet was colorless. The mechanical properties of the pressed sheet were as follows: tensile rupture strength of 490 kg/cm$^2$, and tensile elongation of 80%. The gas barrier properties of the pressed sheet were measured. The pressed sheet had a carbon dioxide permeability coefficient of 14 ml•mm/m$^2$•day•atm and an oxygen permeability coefficient of 3.1 ml•mm/m$^2$•day•atm.

The pressed sheet was stretched simultaneously in the longitudinal (stretch ratio 3 times) and transverse directions (stretch ratio 3 times) by a biaxial stretching apparatus to prepare a biaxially oriented film.

The resulting biaxially oriented film had a thickness of about 11 $\mu$m, and was uniformly stretched with less unevenness in thickness. The mechanical properties of the biaxially oriented film were measured. The film had tensile rupture strength of 1560 kg/cm$^2$, tensile elongation of 54% and tensile modulus of 45000 kg/cm$^2$. The carbon dioxide permeability coefficient of the oriented film was 7.5 ml•mm/m$^2$•day•atm.

Examples 133 to 139

The procedure of Example 132 was repeated except that compositions prepared by using polyethylene terephthalate or cocondensation polyesters indicated in Table 8 in proportions as indicated in Table 19 were used in place of polyethylene terephthalate or cocondensation polyester used in Example 132 to prepare pressed sheets having a thickness of 100 $\mu$m.

The mechanical properties and carbon dioxide permeability coefficients of the resulting pressed sheets are shown in Table 19.

Each pressed sheet was biaxially stretched simultaneously in the longitudinal (stretch ratio 3 times) and transverse directions (stretch ratio 3 times) by the same procedure as in Example 132 to prepare a biaxially oriented film.

The oriented films had an average thickness as shown in Table 19 and were uniformly stretched.

The mechanical properties and carbon dioxide permeability coefficients of the biaxially oriented films are shown in Table 19.

57

Table 19

| | Constituent of composition | | | Physical properties of pressed sheet | | | Physical properties of biaxially oriented film | | | | |
|---|---|---|---|---|---|---|---|---|---|---|---|
| | Polyethylene terephthalate (note 1) | Cocondensation polyester | Amount of cocondensation polyester per 100 parts of polyethylene terephthalate (by weight) | Tensile break strength $(kg/cm^2)$ | Tensile elongation (%) | $CO_2$ Permeability coefficient (*) | Average thickness ($\mu$m) | Tensile break strength $(kg/cm^2)$ | Tensile elongation (%) | Tensile modulus $(kg/cm^2)$ | $CO_2$ permeability coefficient (*) |
| Ex.133 | Mitsui PET J-135 | Ex. 102 | 10 | 500 | 76 | 12 | 11 | 1590 | 48 | 45000 | 7.2 |
| Ex.134 | Mitsui PET J-135 | Ex. 102 | 40 | 470 | 70 | 4.7 | 11 | 1540 | 36 | 43000 | 2.8 |
| Ex.135 | Mitsui PET J-135 | Ex. 102 | 80 | 440 | 65 | 2.6 | 11 | 1500 | 24 | 42000 | 1.6 |
| Ex.136 | Mitsui PET J-135 | Ex. 107 | 10 | 490 | 78 | 15 | 11 | 1540 | 51 | 45000 | 9.0 |
| Ex.137 | Mitsui PET J-125 | Ex. 112 | 10 | 510 | 77 | 13.4 | 11 | 1600 | 47 | 43000 | 8.0 |
| Ex.138 | Mitsui PET J-125 | Ex. 116 | 10 | 490 | 78 | 12.8 | 11 | 1570 | 49 | 44000 | 7.7 |
| Ex.139 | Mitsui PET J-125 | Ex. 121 | 10 | 490 | 75 | 13.1 | 11 | 1580 | 48 | 45000 | 7.9 |

(Note 1) Product of Mitsui Pet Resin KK

(*) ml•mm/m²•day•atm

## Comparative Example 106

Polyethylene terephthalate of Example 132 was press molded into a pressed sheet having a thickness of 100 $\mu$m.

The pressed sheet had the following mechanical properties: tensile rupture strength of 480 kg/cm$^2$, and tensile elongation of 82%. With regard to gas barrier properties, the sheet had a carbon dioxide permeability coefficient of 24 ml·mm/m$^2$·day·atm.

The pressed sheet was biaxially stretched simultaneously in the longitudinal (stretch ratio 3 times) and transverse directions (stretch ratio 3 times) by the same procedure as in Example 132 to prepare a biaxially oriented film having a thickness of about 11 $\mu$m.

The biaxially oriented film had the following mechanical properties: tensile rupture strength of 1550 kg/cm$^2$, tensile elongation of 55% and tensile modulus of 46000 kg/cm$^2$. The carbon dioxide permeability of the biaxially oriented film was 15 ml·mm/m$^2$·day·atm.

## Example 140

The mixture of polyethylene terephthalate and cocondensation polyester of Example 134 was extruded through an extruder equipped with a T-die at a barrel temperature of about 160 to 280°C to prepare an extruded sheet.

The extruded sheet composed of the above composition had the following mechanical properties: tensile rupture strength of 470 kg/cm$^2$ (direction of the flow) to 450 kg/cm$^2$ (perpendicular to direction of the flow), and tensile elongation of 80% (direction of the flow) to 67% (perpendicular to direction of the flow). The carbon dioxide permeability coefficient of the extruded sheet was 4.6 ml·mm/m$^2$·day·atm.

The pressed sheet was stretched at a temperature of about 80 to 110°C in the transverse direction (perpendicular to the flow, stretch ratio twice) and then three in the longitudinal direction (direction of the flow, stretch ratio 3 times) by a biaxial stretching apparatus to prepare a biaxially oriented film having an average thickness of about 13 $\mu$m.

The biaxially oriented had the following mechanical properties: tensile rupture strength of 1620 kg/cm$^2$ (direction of the flow) to 1520 kg/cm$^2$ (perpendicular to direction of the flow), tensile elongation of 52% (direction of the flow) to 37% (perpendicular to direction of the flow), and tensile modulus of 48000 kg/cm$^2$ (direction of the flow) to 45000 kg/cm$^2$ (perpendicular to direction of the flow). The carbon dioxide permeability coefficient of the biaxially oriented film was 2.7 ml·mm/m$^2$·day·atm.

## Example 141

The mixture of polyethylene terephthalate and cocondensation polyester of Example 134 was injection molded at a molding temperature of about 270°C by an injection molding machine to prepare a preform (cold parison) having a thickness of 3.2 mm. The preform was biaxially stretched about in the longitudinal direction (stretch ratio 2.5 times) and about in the transverse direction (stretch ratio 4 times) by a biaxial stretch blow molding machine to prepare a stretched bottle having an inner capacity of about 1 liter.

The stretched bottle had a carbon dioxide permeability coefficient of 4.0 ml·mm/m$^2$·day·atm.

## Comparative Example 107

Polyethylene terephthalate of Example 132 was injection molded to prepare a preform composed of the polyethylene terephthalate layer alone having the same thickness (about 3.2 mm) as that of the preform of Example 141. The preform was stretch blow molded by the same procedure as in Example 141 to prepare a stretched bottle having an inner capacity of about 1 liter.

The resulting stretched bottle had a carbon dioxide permeability coefficient of 4.0 ml·mm/m$^2$·day·atm.

## Example 38

The pressed sheet of the cocondensation polyester of Example 1 and a pressed sheet having a thickness of about 100 μm and prepared by compression molding a dried polyethylene terephthalate (MITSUI PET J 135, a product of Mitsui Pet Resin K.K.) at about 270°C under a pressure of 50 kg/cm², were stacked and press-molded at about 270°C under a pressure of 50 kg/cm² to prepare a multi-layer pressed sheet having a thickness of about 150 μm. The adhesion between the cocondensation polyester layer and the polyethylene terephthalate layer in the multi-layer pressed sheet was good. The multi-layer pressed sheet was had a haze of 0.5%.

The multi-layer pressed sheet was biaxially stretched at a temperature of 80 to 110°C simultaneously in the longitudinal (stretch ratio 3 times) and transverse directions (stretch ratio 3 times) to prepare a biaxially oriented film having an average thickness of 17 μm. The thickness of the cocondensation polyester layer of the biaxially oriented film was about 8 μm, and that of the polyethylene terephthalate layer was about 9 μm. The adhesion between the cocondensation polyester layer and the polyethylene terephthalate layer in the biaxially oriented film was good. The mechanical properties of the biaxially oriented multi-layer film were measured. The film had a tensile rupture strength of 1560 kg/cm², tensile elongation of 52% and tensile modulus of 45000 kg/cm². The carbon dioxide permeability coefficient of the film was 1.85 ml·mm/m²·day·atm.

Examples 39 to 43

The procedure of Example 38 was repeated except that cocondensation polyesters and polyethylene terephthalate indicated in Table 20, in amounts indicated in Table 20 were used in place of the cocondensation polyester and polyethylene terephthalate used in Example 38 to prepare multi-layer pressed sheets each having a thickness of 150 μm. The adhesion between the cocondensation polyester layer and the polyethylene terephthalate layer in each of the resulting multi-layer pressed sheets was good.

Each pressed sheet was biaxially stretched by the same procedure as in Example 38 to prepare a biaxially oriented film having an average thickness of 17 μm. The thickness of the cocondensation polyester layer in these biaxially oriented films was about 8 μm and that of the polyethylene terephthalate layer was about 9 μm. All of these film layers were uniformly stretched. The mechanical properties and carbon dioxide permeability coefficients of these biaxially oriented films were measured.

The results are shown in Table 20.

Table 20

| Example | Resin constituting multi-layer sheet | | Physical properties of biaxially oriented film | | | |
|---|---|---|---|---|---|---|
| | Polyethylene terephthalate (Note 1) | Cocondensation polyester | Tensile break strength [kg/cm$^2$] | Tensile elongation [%] | Tensile modulus [kg/cm$^2$] | $CO_2$ permeability coefficient [ml·mm/m$^2$·day·atm] |
| 39 | Mitsui PET J-135 | Example 2 | 1580 | 50 | 45000 | 1.6 |
| 40 | " | Example 7 | 1560 | 51 | 45000 | 2.5 |
| 41 | Mitsui PET J-125 | Example 12 | 1590 | 50 | 45000 | 1.8 |
| 42 | " | Example 15 | 1560 | 51 | 44000 | 1.7 |
| 43 | " | Example 20 | 1570 | 50 | 45000 | 1.8 |

Note 1: Product of Mitsui Pet Resin K.K.

Comparative Example 6

The same dried polyethylene terephthalate as that used in Example 38 was press molded to prepare a pressed sheet having a thickness of 100 $\mu$m. The pressed sheet has the following mechanical properties: a tensile rupture strength of 480 kg/cm$^2$ and tensile elongation of 82%. The sheet had the following gas barrier properties: a carbon dioxide permeability coefficient of 24 ml•mm/m$^2$•day•atm, and an oxygen permeability coefficient of 4.6 ml•mm/m$^2$•day•atm.

The pressed sheet was biaxially stretched both in the longitudinal (stretch ratio 3 times) and transverse directions (stretch ratio 3 times) by the same procedure as in Example 38 to prepare a biaxially oriented film having a thickness of about 11 $\mu$m. The biaxially oriented film had the following mechanical properties: a tensile rupture strength of 1550 kg/cm$^2$, tensile elongation of 55% and tensile modulus of 46000 kg/cm$^2$. The film had the following gas barrier properties: a carbon dioxide permeability coefficient of 15 ml•mm/m$^2$•day•atm and an oxygen permeability coefficient of 2.6 ml•mm/m$^2$•day•atm.

Example 44

The same dried polyethylene terephthalate as that used in Example 39 was prepared and press molded at about 270°C under a pressure of about 50 kg/cm$^2$ to prepare a pressed sheet having a thickness of about 100 $\mu$m.

The pressed sheet of the cocondensation polyester prepared in Example 1 and two pressed sheets of polyethylene terephthalate prepared as described above were placed together in layers so that the pressed sheet of the cocondensation polyester was sandwiched between the two polyethylene terephthalate sheets. The entire body was press-molded at about 270°C under a pressure of about 50 kg/cm$^2$ to prepare a multi-layer pressed sheet having a thickness of about 20 $\mu$m.

The adhesion of the cocondensation polyester layer to the polyethylene terephthalate layers in the multi-layer pressed sheet was good. The multi-layer pressed sheet was found to have a haze of 0.3%.

Subsequently, the multi-layer pressed sheet was biaxially stretched simultaneously both in the longitudinal (stretch ratio 3 times) and transverse directions (stretch ratio 3 times) at a temperature of about 85 to 110°C to prepare a biaxially oriented film having a thickness of about 22 $\mu$m.

In the biaxially oriented film, the polyethylene terephthalate layers each had a thickness of about 7 $\mu$m and the cocondensation polyester layer had a thickness of about 10 $\mu$m. The adhesion of the cocondensation polyester layer to the polyethylene terephthalate layers in the biaxially oriented film was good. The gas barrier properties of the biaxially oriented film was measured. The film had a carbon dioxide permeability coefficient of 1.9 ml•mm/m$^2$•day•atm and an oxygen permeability coefficient of 0.67 ml•mm/m$^2$•day•atm.

Example 45

The same dried polyethylene terephthalate as that used in Example 38 was molted by using an extruder. The cocondensation polyester prepared n Example 15 was molten by using another extruder. These molted materials were fed to a two type three-layer T-die to prepare a co-extruded sheet composed of polyethylene terephthalate/cocondensation polyester/polyethylene terephthalate (thickness; about 40 $\mu$m/20 $\mu$m/40 $\mu$m).

The co-extruded sheet was transparent and the adhesion of the cocondensation polyester to the polyethylene terephthalate layers was good. The sheet was had a haze of 0.4%.

The multi-layer co-extruded sheet was stretched at a temperature of about 80 to 110°C in the transverse direction at first (perpendicular to the direction of flow, stretch ratio twice) and then in the longitudinal direction (direction of flow stretch ratio 3 times) by using a biaxial stretching apparatus to prepare a biaxially oriented film having an average thickness of about 17 $\mu$m, composed of two kinds of materials, and consisting of three layers. The adhesion of the cocondensation polyester layer to the polyethylene terephthalate layers in the biaxially oriented film was good. The thickness of the cocondensation polyester layer of the biaxially oriented laminated film was about 3 $\mu$m, and that of the polyethylene terephthalate layer was about 7 $\mu$m. The stretched film had the following mechanical properties: a tensile strength of 1550 kg/cm² (flow direction) to 1150 kg/cm² (perpendicular to flow direction), tensile elongation of 65% (flow direction) to 42% (perpendicular to flow direction) and tensile modulus of 43000 kg/cm² (flow flow direction) to 36000 kg/cm² (perpendicular to flow direction ). Further, the film was had a carbon dioxide permeability coefficient of 1.7 ml•mm/m²•day•atm.

Example 46

The same dried polyethylene terephthalate as that used in Example 38 was press molded at about 260°C to prepare a pressed sheet having a thickness of about 100 μm. Separately, a mixture consisting of 100 parts by weight of the above-described polyethylene terephthalate and 40 parts by weight of the cocondensation polyester of Example 1 dried in vacuo at 50°C for 12 hours, was melt extruded through another extruder at about 260°C to prepare pellets having the above-described composition. The pellets were press molded at about 260°C to prepare a pressed sheet having a thickness of about 100 μm. The above-described pressed sheet of polyethylene terephthalate and the pressed sheet composed of the composition of polyethylene terephthalate and cocondensation polyester were stacked and press molded at about 260°C to prepare a laminated sheet having a thickness of about 150 μm, composed of two kinds of materials, and consisting of two layers. The adhesion of the polyethylene terephthalate layer to the composition layer in the laminated sheet was good. The sheet had the following mechanical properties: a tensile strength of 490 kg/cm² and tensile elongation of 78%. The gas barrier properties of the laminated pressed sheet were measured. The sheet had a carbon dioxide permeability coefficient of 5.7 ml•mm/m²•day•atm.

The laminated sheet composed of the polyethylene terephthalate layer and the composition layer was stretched simultaneously both in the longitudinal (stretch ratio 3 times) and transverse directions (stretch ratio 3 times) by the same procedure as in Example 38 by a biaxial stretching apparatus to prepare a biaxially oriented film. The resulting biaxially oriented film had a thickness of about 17 μm, and was uniformly stretched biaxially. The adhesion between the polyethylene terephthalate layer and the composition layer in the biaxially oriented film was good. The mechanical properties of the biaxially oriented laminated film were measured. The film had a tensile rupture strength of 1560 kg/cm², tensile elongation of 48% and tensile modulus of 43000 kg/cm². Further, the film was had a carbon dioxide permeability coefficient of 3.8 ml•mm/m²•day•atm.

Examples 47 to 50

The procedure of Example 46 was repeated except that polyethylene terephthalate indicated in Table 21 or a composition of polyethylene terephthalate and cocondensation polyester indicated in Table 21 was used in place of polyethylene terephthalate or the composition of Example 46 to prepare a laminated sheet having a thickness of about 150 μm, composed of two kinds of materials, and consisting of two layers. The adhesion of the polyethylene terephthalate layer to the composition layer in any of the resulting laminated sheets was good. The mechanical properties and carbon dioxide permeability coefficients of the laminated sheets are shown in Table 21.

Each laminated sheet was biaxially stretched by the same procedure as in Example 46 to prepare a biaxially oriented film having a stretch ratio indicated in Table 21. All of the resulting biaxially oriented films had a thickness as shown in Table 21 and were uniformly stretched. The adhesion between the polyethylene terephthalate layer and the composition layer in any of the stretched films was good. The mechanical properties and gas barrier properties of the biaxially oriented films were measured.

The results are shown in Table 21.

Table 21

| Example | Polyethylene terephthalate (Note 1) | Constituent of composition | | | Physical properties of pressed sheet | | |
|---|---|---|---|---|---|---|---|
| | | Polyethylene terephthalate (Note 1) | Cocondensation polyester | Amount of cocondensate per 100 parts of polyethylene terephthalate [by weight] | Tensile break strength $[kg/cm^2]$ | Tensile elongation [%] | CO2 permeability coefficient $[ml \cdot mm/m^2 \cdot day \cdot atm]$ |
| 47 | Mitsui Pet J-135 | Mitsui Pet J-135 | Ex. 1 | 10 | 490 | 75 . | 13.8 |
| 48 | " | " | Ex. 2 | 40 | 480 | 78 | 5.7 |
| 49 | " | " | Ex. 12 | 40 | 480 | 76 | 5.8 |
| 50 | Mitsui Pet J-125 | Mitsui Pet J-125 | Ex. 15 | 40 | 480 | 73 | 5.3 |

Note 1: Product of Mitsui Pet Resin K.K.

EP 0 394 751 A2

Table 21 (continued)

| Example | Biaxially oriented film | | | | | |
|---|---|---|---|---|---|---|
| | Stretch ratio [times] | Physical properties | | | | |
| | | Average thickness [$\mu$m] | Tensile break strength [kg/cm$^2$] | Tensile elongation [%] | Tensile modulus [kg/cm$^2$] | $CO_2$ permeability coefficient [ml•mm/m$^2$•day•atm] |
| 47 | 3 × 3 | 16 | 1570 | 48 | 45000 | 9.5 |
| 48 | 3 × 3 | 16 | 1560 | 53 | 45000 ' | 3.5 |
| 49 | 3 × 3 | 16 | 1570 | 50 | 45000 | 3.5 |
| 50 | 3 × 3 | 16 | 1520 | 47 | 45000 | 3.2 |

### Example 51

Polyethylene terephthalate of Example 38 was first injection molded, and then the cocondensation polyester of Example 1 was injection molded to prepare a preform composed of a polyethylene terephthalate layer and a cocondensation polyester layer, each layer having a thickness of about 1.6 mm.

The preform was heated to 85 to 110°C with a far infrared heating device and stretched about in the longitudinal direction (stretch ratio about 2.5 times) and in the transverse direction (stretch ratio about 4.3 times) by a stretch blow molding machine to prepare a stretched bottle having an inner capacity of about 1 liter, and a thickness of the polyethylene terephthalate layer about 150μm and a thickness of the cocondensation polyester layer about the smallest wall thickness. The resulting stretched bottle had a carbon dioxide permeability coefficient of 0.58 ml·/day·bottle·atm and an oxygen permeability coefficient of 0.19 ml/day·bottle·atom.

### Comparative Example 7

The same polyethylene terephthalate as that used in Example 38 was injection molded to prepare a preform composed of a polyethylene terephthalate layer along having the same thickness (about 3.2 mm) as that of the preform of Example 38. The preform was stretch blow molded by the same procedure as in Example 14 to prepare a stretched bottle having an inner capacity of about 1 liter, and a thickness of about 300 μm at the part having the smallest wall thickness.

The stretched bottle had a carbon dioxide permeability coefficient of 4.0 ml/day·bottle·atom and an oxygen permeability coefficient of 1.1 ml/day·bottle·atm.

### Example 52

Polyethylene terephthalate of Example 38 was melted by an extruder. Separately, a cocondensation polyester prepared by the same procedure as in Example 15 was melted by another extruder. These melted materials were each fed to a two type three-layer pipe die, and extruded into a three-layer pipe composed of polyethylene terephthalate/cocondensation polyester/polyethylene terephthalate (thickness: about 1.2 mm/1.2 mm/1.2 mm). The extrudate was cooled with water to obtain a three-layer pipe having an outer diameter of 24.8 mm and a thickness of 3.6 mm. The pipe was cut. One end was melted by heating to form a bottom portion, and the other end was melted by heating likewise to form a spigot, thus a preform having a total length of 16.5 cm and a weight of about 50 g being obtained.

The preform was biaxially stretched in the longitudinal direction (stretch ratio 2.5 times) and in the transverse direction (stretch ratio 4 times) by a biaxial stretch blow molding machine (Model LB01 manufactured by Corpoplast Co.,Ltd.) to obtain a multi-layer container (having layers of polyethylene terephthalate/ cocondensation polyester/polyethylene terephthalate thickness about 120 μm/about 120 μm/about 120 μm). The multi-layer container was had a carbon dioxide permeability coefficient of 0.56 ml//day·bottle·atm and an oxygen permeability coefficient of 0.18 ml/day·bottle·atm. A dropping test was carried out by filling the container with water at 0°C, and dropping it. When the multi-layer container was allowed to drop from a height of 1 meter, it showed neither destruction nor delamination of the layers.

### Example 53

Two-layer injection molding machines were used. Polyethylene terephthalate of Example 38 was melted at a molding temperature of 270°C by an injection molding machine. Separately, the mixture of polyethylene terephthalate and cocondensation polyester of Example 46 was melted at a molding temperature of about 270°C by another injection molding machine. These melts were two-layer injection molded into a cooled single preform mold to prepare a two-layer preform composed of an inner layer of polyethylene terephthalate (thickness: about 1.6 mm) and an outer layer of the composition consisting of polyethylene terephthalate and cocondensation polyester (thickness: about 1.6 mm). The preform was biaxially stretched in the longitudinal direction (stretch ratio about 2.5 times) and in the transverse direction (stretch ratio about 4 times) by a biaxial stretch blow molding machine (Model LB01, manufactured by Corpoplast Co.,Ltd.) to prepare a multi-layer container having an inner capacity of about 1 liter. The polyethylene terephthalate layer of the multi-layer container had an average thickness of about 150 $\mu$m, and thus the composition layer had an average thickness of about 150 $\mu$m, thus uniform stretching being confirmed. The multi-layer container was had a carbon dioxide permeability coefficient of 1.5 ml/day•bottle•atm.

Example 142

The pressed sheet of the cocondensation polyester of Example 101 and the pressed sheet having a thickness of about 100 $\mu$m prepared by compression molding a dried polyethylene terephthalate (MITSUI PET J 135, a product of Mitsui Pet Resin KK) at about 270°C under a pressure of 50 kg/cm$^2$, were stacked and press molded at about 270°C under a pressure of 50 kg/cm$^2$ to prepare a multi-layer pressed sheet having a thickness of about 150 $\mu$m. The adhesion between the cocondensation polyester layer and the polyethylene terephthalate layer in the multi-layer pressed sheet was good. The multi-layer pressed sheet was had a haze of 0.5%.

The multi-layer pressed sheet was biaxially stretched simultaneously in the longitudinal (stretch ratio 3 times) and transverse directions (stretch ratio 3 times) at a temperature of 80 to 110°C to prepare a biaxially oriented film having an average thickness of 17 $\mu$m. The thickness of the cocondensation polyester layer of the film was about 8 $\mu$m, and that of the polyethylene terephthalate layer was about 9 $\mu$m. The adhesion between the cocondensation polyester layer and the polyethylene terephthalate layer in the biaxially oriented film was good. The mechanical properties of the film were as follows: tensile rupture strength of 1540 kg/cm$^2$, tensile elongation of 53% and tensile modulus of 45000 kg/cm$^2$. The carbon dioxide permeability coefficient of the film was 1.8 ml•mm/m$^2$•day•atm.

Examples 143 to 147

The procedure of Example 142 was repeated except that cocondensation polyester and polyethylene terephthalate both as indicated in Table 22 were used in amounts as indicated in Table 22 in place of cocondensation polyester and polyethylene terephthalate used in Example 142 to prepare a multi-layer pressed sheet having a thickness of 150 $\mu$m. The adhesion between the cocondensation polyester layer and the polyethylene terephthalate layer in any of the resulting multi-layer pressed sheets was good.

Each of the pressed sheets was biaxially stretched by the same procedure as in Example 142 to prepare a biaxially oriented film having an average thickness of 17 $\mu$m. The cocondensation polyester layers of the resulting films had a thickness of about 8 $\mu$m, and the polyethylene terephthalate layers thereof had a thickness of about 9 $\mu$m. All of these films were uniformly stretched films. The mechanical properties and carbon dioxide permeability coefficients of the biaxially oriented films are shown in Table 22.

Table 22

| Example | Resin constituting laminated sheet | | Physical properties of biaxially oriented film | | | |
|---|---|---|---|---|---|---|
| | Polyethylene terephthalate (Note 1) | Cocondensation polyester | Tensile break strength [kg/cm$^2$] | Tensile elongation [%] | Tensile modulus [kg/cm$^2$] | Carbon dioxide permeability coefficient [ml·mm/m$^2$·day·atm] |
| 143 | Mitsui PET J-135 | Ex. 103 | 1580 | 49 | 45000 | 1.9 |
| 144 | Mitsui PET J-135 | Ex. 116 | 1570 | 51 | 45000 | 1.6 |
| 145 | Mitsui PET J-125 | Ex. 107 | 1580 | 47 | 46000 | 3.0 |
| 146 | Mitsui PET J-125 | Ex. 113 | 1520 | 50 | 45000 | 1.8 |
| 147 | Mitsui PET J-135 | Ex. 121 | 1570 | 48 | 45000 | 1.8 |

Note 1: Product of Mitsui Pet Resin K.K.

Comparative Example 108

The same dried polyethylene terephthalate as that used in Example 142 was press molded to prepare a pressed sheet having a thickness of about 100 $\mu$m. The pressed sheet had the following mechanical properties: tensile rupture strength of 480 kg/cm$^2$, and tensile elongation of 82%. With regard to gas barrier properties, the sheet had a carbon dioxide permeability coefficient of 24 ml$\cdot$mm/m$^2$$\cdot$day$\cdot$atm and an oxygen permeability coefficient of 4.6 ml$\cdot$mm/m$^2$$\cdot$day$\cdot$atm.

The pressed sheet was biaxially stretched simultaneously in the longitudinal (stretch ratio 3 times) and transverse directions (stretch ratio 3 times) by the same procedure as in Example 142 to prepare a biaxially oriented film having a thickness of about 11 $\mu$m. The biaxially oriented film had the following tensile rupture strength of 1550 kg/cm$^2$, tensile elongation of 55% and tensile modulus of 46000 kg/cm$^2$. With regard to gas barrier properties, the film had a carbon dioxide permeability coefficient of 15 ml$\cdot$mm/m$^2$$\cdot$day$\cdot$atm and an oxygen permeability coefficient of 2.6 ml$\cdot$mm/m$^2$$\cdot$day$\cdot$atm.

Example 148

The same dried polyethylene terephthalate as that used in Example 144 was prepared and press molded at about 270$^\circ$C under a pressure of 50 kg/cm$^2$ to prepare a pressed sheet having a thickness of about 100 $\mu$m.

The pressed sheet of the cocondensation polyester prepared in Example 102 and the two pressed sheet of polyethylene terephthalate prepared as described above, were stacked so that the pressed sheet of cocondensation polyester was sandwiched between the two pressed sheets of polyethylene terephthalate. The stacked sheets were press molded at about 270$^\circ$C under a pressure of about 50 kg/cm$^2$ to prepare a multi-layer pressed sheet having a thickness of about 200 $\mu$m.

The adhesion of the cocondensation polyester layer to the polyethylene terephthalate layers in the multi-layer pressed sheet was good. The multi-layer pressed sheet had a haze of 0.5%.

The multi-layer pressed sheet was biaxially stretched simultaneously both in the longitudinal (stretch ratio 3 times) and transverse directions (stretch ratio 3 times) at a temperature of about 85 to 110$^\circ$C to prepare a biaxially oriented film having a thickness of about 22 $\mu$m.

In the biaxially oriented film, two polyethylene terephthalate layers each had a thickness of about 7 $\mu$m, and the cocondensation polyester layer had a thickness of about 10 $\mu$m. The adhesion of the cocondensation polyester layer to the polyethylene terephthalate layers in the film was good. The gas barrier properties of the biaxially oriented film were measured. The film had a carbon dioxide permeability coefficient of 1.7 ml$\cdot$mm/m$^2$$\cdot$day$\cdot$atm and an oxygen permeability coefficient of 0.4 ml$\cdot$mm/m$^2$$\cdot$day$\cdot$atm.

Example 149

The same dried polyethylene terephthalate as that used in Example 142 was melted by an extruder. The cocondensation polyester of Example 116 was melted by using another extruder. These melts were fed to a two type three-layer T-die to prepare a co-extruded sheet composed of polyethylene terephthalate/cocondensation polyester/polyethylene terephthalate (thickness: about 40 $\mu$m/20 $\mu$m/40 $\mu$m).

The co-extruded sheet was transparent. The adhesion of the cocondensation polyester layer to the polyethylene terephthalate layers was good. The co-extruded sheet had a haze of 0.7%.

The multi-layer co-extruded sheet was stretched at first in the transverse direction (perpendicular to flow direction, stretch ratio twice) and then in the longitudinal direction (flow direction, stretch ratio 3 times) at a temperature of about 80 to 110$^\circ$C by a biaxial stretching apparatus to prepare a biaxially oriented film having an average thickness of about 17 $\mu$m, composed of two kinds of materials and three layers. The adhesion of the cocondensation polyester layer to the polyethylene terephthalate layers in the film was good. The thickness of the cocondensation polyester layer in the biaxially oriented laminated film was about 3 $\mu$m, and that of the polyethylene terephthalate layer was about 7 $\mu$m. The stretched film had the following mechanical properties: a tensile rupture strength of 1540 kg/cm$^2$ (flow direction) to 1140 kg/cm$^2$ (perpendicular to flow direction), tensile elongation of 68% (flow direction) to 45% (perpendicular to flow direction) and tensile modulus of 45000 kg/cm$^2$ (flow direction) to 43000 kg/cm$^2$ (perpendicular to flow

direction). The carbon dioxide permeability coefficient of the film was 1.8 ml•mm/m$^2$•day•atm.

Example 150

The same dried polyethylene terephthalate as that used in Example 142 was press molded at about 260°C to prepare a pressed sheet having a thickness of about 100 μm. Separately, a mixture of 100 parts by weight of the above-described polyethylene terephthalate and 40 parts by weight of the cocondensation polyester of Example 102 dried in vacuo at 50°C for 12 hours, was melt extruded through another extruder at about 260°C to prepare pellets having the above-described composition. The pellets composed of the composition were press molded at about 260°C to prepare a pressed sheet having a thickness of about 10 μm. The above-described pressed sheet of polyethylene terephthalate and the pressed sheet of the composition composed of the polyethylene terephthalate and cocondensation polyester, were stacked and press molded at about 260°C to prepare a laminated sheet having a thickness of about 150 μm, composed of two kinds of materials, and consisting of two layers. The adhesion between the polyethylene terephthalate layer and the composition layer in the resulting laminated sheet was good. The sheet had the following mechanical properties: a tensile strength of 470 kg/cm$^2$ and tensile elongation of 75%. The gas barrier properties of the laminated pressed sheet was measured. The sheet had a carbon dioxide permeability coefficient of 5.0 ml•mm/m$^2$•day•atm.

The laminated sheet composed of the polyethylene terephthalate layer and the composition layer was stretched simultaneously both in the longitudinal (stretch ratio 3.0 times) and transverse directions (stretch ratio 3.0 times) by the same procedure as in Example 142 by a biaxial stretching apparatus to prepare a biaxially oriented film. The resulting biaxially oriented film had a thickness of about 17 μm, and biaxially uniformly stretched. The adhesion between the polyethylene terephthalate layer and the composition layer was good. The mechanical properties of the biaxially oriented multi-layer film were measured. The film had a tensile rupture strength of 1530 kg/cm$^2$, tensile elongation of 48% and tensile modulus of 45000 kg/cm$^2$. The carbon dioxide permeability coefficient of the film was 3.5 ml•mm/m$^2$•day•atm.

Examples 151 to 154

The procedure of Example 150 was repeated except that polyethylene terephthalate indicated in table 23 or a composition of polyethylene terephthalate and cocondensation polyester indicated in Table 23 was used in place of the polyethylene terephthalate or the composition used in Example 150 to prepare a laminated sheet having a thickness of about 150 μm, composed of two kinds of materials, and consisting of two layers. The adhesion between the polyethylene terephthalate layer and the composition layer in any of the resulting laminated sheets was good. The mechanical properties and carbon dioxide permeability coefficients of the laminated sheets are shown in Table 23.

Each laminated sheet was biaxially stretched by the same procedure as in Example 150 to prepare a biaxially oriented film having a stretch ratio as shown in Table 23. The biaxially oriented films each had a thickness as shown in Table 23 and was uniformly stretched. The adhesion between the polyethylene terephthalate layer and the composition layer in any of the biaxially oriented films was good. The mechanical properties and gas barrier properties of the films were measured. The results are shown in Table 23.

70

Table 23

| Example | Polyethylene terephthalate (Note 1) | Constituent of composition | | | Physical properties of pressed sheet | | | Biaxially oriented film | | | | | |
|---|---|---|---|---|---|---|---|---|---|---|---|---|---|
| | | Polyethylene terephthalate (Note 1) | Cocondensation polyester | Amount of cocondensate per 100 parts of polyethylene terephthalate (by weight) | Tensile break strength [kg/cm$^2$] | Tensile elongation [%] | $CO_2$ permeability coefficient [*] | Physical properties | | | | | |
| | | | | | | | | Stretch ratio [time] | Average thickness [μm] | Tensile break strength [kg/cm$^2$] | Tensile elongation [%] | Tensile modulus [kg/cm$^2$] | $CO_2$ permeability coefficient [*] |
| 151 | Mitsui Pet J-135 | Mitsui Pet J-135 | Ex. 102 | 10 | 480 | 77 | 12 | 3 × 3 | 16 | 1560 | 49 | 46000. | 7.5 |
| 152 | " | " | Ex. 102 | 80 | 460 | 63 | 3 | 3 × 3 | 16 | 1510 | 32 | 43000 | 2.5 |
| 153 | " | " | Ex. 112 | 40 | 470 | 72 | 5.5 | 3 × 3 | 16 | 1550 | 48 | 44000 | 4.0 |
| 154 | Mitsui Pet J-125 | Mitsui Pet J-125 | Ex. 116 | 40 | 470 | 74 | 5.1 | 3 × 3 | 16 | 1570 | 48 | 45000 | 3.8 |

Note 1: Product of Mitsui Pet Resin K.K.

[*] : ml•mm/m$^2$•day•atm

EP 0 394 751 A2

Example 155

The same polyethylene terephthalate as that used in Example 142 was first injection molded, and then the cocondensation polyester of Example 102 was injection molded to prepare a preform composed of a polyethylene terephthalate layer and a cocondensation polyester layer, each layer having a thickness of about 1.6 mm.

The preform was heated to 85 to 110°C with a far infrared heating device, and stretched about in the longitudinal direction (stretch ratio about 2.5 times) and in the transverse direction (stretch ratio about 4.3 times)by using a stretch blow molding machine to prepare a stretched bottle having a thickness of the polyethylene terephthalate layer of about 150 μm and a thickness of the cocondensation layer of about 150 μm at the part thereof having the smallest wall thickness, and an inner capacity of about 1 liter. The stretched bottle was had a carbon dioxide permeability coefficient of 0.55 ml•mm/m²•day•atm and an oxygen permeability coefficient of 0.19 ml•mm/m²•day•atm.

Comparative Example 109

The same polyethylene terephthalate as that used in Example 142 was injection molded to prepare a preform composed of a polyethylene terephthalate layer alone having the same thickness (about 3.2 mm) as that of the preform of Example 155. The preform was stretch blow molded by the same procedure as in Example 155 to prepare a stretched bottle having a thickness of about 300 μm at the smallest wall thickness part and an inner capacity of about 1 liter. The stretched bottle was had a carbon dioxide permeability coefficient of 4.0 ml/day•bottle•atm and an oxygen permeability coefficient of 1.1 ml/-day•bottle•atm.

Example 156

Polyethylene terephthalate of Example 142 was melted by an extruder. Separately, a cocondensation polyester prepared in the same procedure as in Example 112 was melted by another extruder. Both melts were fed to two three-layer pipe dies, respectively, and extruded into a three-layer pipe, the three layers composed of polyethylene terephthalate/cocondensation polyester/ polyethylene terephthalate (thickness: about 1.2 mm/1.2 mm/1.2 mm). The extrudate was cooled with water to obtain a three-layer pipe having an outer diameter of 24.8 mm and a thickness of 3.6 mm. The pipe was cut. One end was melted by heating to form a bottom portion, and the other end was melted by heating likewise to form a spigot, thus a preform having a whole length of 16.5 cm and a weight of about 50 g being obtained.

The preform was biaxially stretched in the longitudinal direction (stretch ratio 2.5 times) and in the transverse direction (stretch ratio 4 times) by a biaxial stretch blow molding machine (Model LB01, manufactured by Corpoplast Co.) to prepare a multi-layer container (having three layers composed of polyethylene terephthalate/cocondensation polyester/polyethylene terephthalate = thickness about 120 μm/about 120 μm/about 120 μm) having an inner capacity of 1.5 liter. The multi-layer container had a carbon dioxide permeability coefficient of 0.54 ml/day•bottle•atm and an oxygen permeability coefficient of 0.18 ml/day•bottle•atm. A dropping test was carried out by filling the container with water at 0°C, and dropping it. When the container was dropped from a height of 1 meter, the multi-layer container showed neither destruction nor delamination of the layers.

Example 157

Two-layer injection molding machines were used. Polyethylene terephthalate of Example 1 was melted at a molding temperature of about 270°C by an injection molding machine. Separately, the mixture of polyethylene terephthalate and cocondensation polyester of Example 150 was melted at a molding temperature of about 270°C by another injection molding machine. The melts were two-layer injection molded into a cooled single preform mold to prepare a two-layer preform composed of an inner layer (thickness: about 1.6 mm) of polyethylene terephthalate and an outer layer (thickness: about 1.6 mm) of the composition consisting of polyethylene terephthalate and cocondensation polyester. The preform was biaxially stretched in the longitudinal direction (stretch ratio about 2.5 times) and in the transverse direction (stretch ratio about 5 times) by a biaxial stretch blow molding machine (Model LB01, manufactured by Corpoplast Co., Ltd.) to prepare a multi-layer container having an inner capacity of about 1 liter. The polyethylene terephthalate layer of the multi-layer container had an average thickness of about 150 μm, and the composition layer had an average thickness of about 150 μm, thus, uniform stretching being confirmed. The multi-layer container had a carbon dioxide permeability coefficient of 1.4 ml/day•bottle•atm.

**Claims**

1. A cocondensation polyester which is substantially linear and is composed of
(a) 25 to 42 mol% of mononuclear aromatic dicarboxylic acid constituent units comprising isophthalic acid constituent units as their main ingredient,
(b) 8 to 25 mol% of binuclear aromatic dicarboxylic acid constituent units comprising 2,6-naphthalenedicarboxylic acid constituent units as their main ingredient,
(c) 48 to 50 mol% of diol constituent units comprising ethylene glycol constituent units as their main ingredient,
(d) 0 to 2 mol% of polyfunctional constituent units derived from a polyfunctional compound having 3 or more carboxyl groups and/or hydroxyl groups in total and 3 to 15 carbon atoms,
said polyester having an intrinsic viscosity [ η] of 0.5 to 1.5 dl/g and a glass transition temperature of 70°C or higher.

2. A process for the preparation of
a cocondensation polyester composed of 25 to 42 mol% of mononuclear aromatic dicarboxylic acid constituent units (a), 8 to 25 mol% of binuclear aromatic dicarboxylic acid constituent units (b), 48 to 50 mol% of diol constutuent units (c) and 0 to 2 mol% of polyfunctional constutuent units (d), comprising the steps of
heating a mixture of
(a′) a mononuclear aromatic dicarboxylic acid component comprising isophthalic acid or its ester as the main ingredient thereof,
(b′) a binuclear aromatic dicarboxylic acid component comprising 2,6-naphthalenedicarboxylic acid or its ester as the main ingredient thereof,
(c′) diols comprising ethylene glycol as their main ingredient, and
(d′) a polyfuctional component composed of a polyfunctional compound having 3 or more carboxyl groups and/or hydroxyl groups in total and 3 to 15 carbon atoms, or of its ester,
said heating effecting esterification reaction or ester exchange reaction of the above-described constituents; and
conducting cocondensation polymerization reaction at a temperature in the range of 230 to 300°C in the presence of catalyst comprising a phosphorus compound and a compound selected from the group consisting of germanium compounds, antimony compounds and titanium compounds.

3. A cocondensation polyester which is substantially linear and is composed of
(a) 2.5 to 45 mol% of mononuclear aromatic dicarboxylic acid constituent units comprising isophthalic acid constituent units as their main ingredient,
(b) 2.5 to 25 mol% of binuclear aromatic dicarboxylic acid constituent units comprising 2,6-naphthalenedicarboxylic acid constituent units as their main ingredient ,
(c) 48 to 50 mol% of diol constituent units comprising ethylene glycol constituent units as their main ingredient,
(d) 0 to 2 mol% of polyfunctional constituent units derived from a polyfunctional compound having 3 or more carboxyl groups and/or hydroxyl groups in total and 3 to 15 carbon atoms, and
(e) 2.0 to 22.5 mol% of aliphatic dicarboxylic acid constituent units comprising succinic acid constituent units as their main ingredient,
said polyester having an intrinsic viscosity [η] of 0.5 to 1.5 dl/g.

4. A process for the preparation of
a cocondensation polyester composed of 2.5 to 45 mol% of mononuclear aromatic dicarboxylic acid constituent units (a), 2.5 to 25 mol% of of binuclear aromatic dicarboxylic acid constituent units (b), 48 to 50 mol% of diol constutuent units (c), 0 to 2 mol% of polyfunctional constutuent units (d) and 2.0 to 22.5 mol% of aliphatic dicarboxylic acid constituent units, comprising the steps of
heating a mixture of

(a') a mononuclear aromatic dicarboxylic acid component comprising isophthalic acid or its ester as the main ingredient thereof,

(b') a binuclear aromatic dicarboxylic acid component comprising 2,6-naphthalenedicarboxylic acid or its ester as the main ingredient thereof,

(c') diols comprising ethylene glycol as their main ingredient,

(d') a polyfuctional component composed of a polyfunctional compound having 3 or more carboxyl groups and/or hydroxyl groups in total and 3 to 15 carbon atoms, or of its ester, and

(e') an aliphatic dicarboxylic acid component comprising succinic acid or its ester as the main ingredient thereof,

said heating effecting esterification reaction or ester exchange reaction of the above-described components; and

conducting cocondensation polymerization reaction at a temperature in the range of 230 to 300°C in the presence of catalyst comrising a phosphorus compound and a compound selected from the group consisting of germanium compounds, antimony compounds and titanium compounds.

5. A gas barrier property-imparting agent comprising a cocondensation polyester which is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms,

said polyester having an intrinsic viscosity $[\eta]$ of 0.5 to 1.5 dl/g and a glass transition temperature of 70°C or higher.

6. A gas barrier property-imparting agent comprising a cocondensation polyester which is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient,

said polyester having an intrinsic viscosity $[\eta]$ of 0.5 to 1.5 dl/g.

7. A polyester resin composition comprising a polyalkylene terephthalate containing ethylene terephthalate constituent units as its main ingredient and a cocondensation polyester,

wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms,

said cocondensation polyester having an intrinsic viscosity $[\eta]$ of 0.5 to 1.5 dl/g and a glass transition temperature of 70°C or higher.

8. A polyester resin composition comprising a polyalkylene terephthalate containing ethylene terephthalate constituent units as its main ingredient and a cocondensation polyester, wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naph-

74

EP 0 394 751 A2

thalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient,

said polyester having an intrinsic viscosity [η] of 0.5 to 1.5 dl/g.

9. A stretch molding of a polyester resin composition comprising a polyalkylene terephthalate containing ethylene terephthalate constituent units as its main ingredient and a cocondensation polyester,

wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms,

said cocondensation polyester having an intrinsic viscosity [η] of 0.5 to 1.5 dl/g and a glass transition temperature of 70°C or higher.

10. A stretch molding of a polyester resin composition comprising a polyalkylene terephthalate containing ethylene terephthalate constituent units as their main ingredient and a cocondensation polyester, wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient,

said cocondensation polyester having an intrinsic viscosity [η] of 0.5 to 1.5 dl/g.

11. A preform for the preparation of a stretch blow molding of a polyester resin composition comprising a polyalkylene terephthalate containing ethylene terephthalate constituent units as their main ingredient and a cocondensation polyester,

wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxy 1 groups and/or hydroxyl groups in total and 3 to 15 carbon atoms,

said cocondensation polyester having an intrinsic viscosity [η] of 0.5 to 1.5 dl/g and a glass transition temperature of 70°C or higher.

12. A preform for the preparation of a stretch blow molding of a polyester resin composition comprising a polyalkylene terephthalate containing ethylene terephthalate constituent units as their main ingredient and a cocondensation polyester,

wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient,

said polyester having an intrinsic viscosity [$\eta$] of 0.5 to 1.5 dl/g.

13. A stretch blow molding formed from a polyester resin composition comprising a polyalkylene terephthalate containing ethylene terephthalate constituent units as their main ingredient and a cocondensation polyester,

wherein said cocondensation polyester is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms,

said cocondensation polyester having an intrinsic viscosity [$\eta$] of 0.5 to 1.5 dl/g and a glass transition temperature of 70°C or higher.

14. A stretch blow molded article of a polyester resin composition comprising a polyalkylene terephthalate containing ethylene terephthalate constituent units as their main ingredient and a cocondensation polyester,

wherein said cocondensation polyester is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient,

said cocondensation polyester having an intrinsic viscosity [$\eta$] of 0.5 to 1.5 dl/g.

15. A polyester resin laminated molding comprising

a layer composed of a cocondensation polyester or

a polyseter resin composition layer comprising (i) a polyalkylene terephthalate containing ethylene terephthalate constituent units as its main ingredient and (ii) a cocondensation polyester, and

a layer composed of polyalkylene terephthalate comprising ethylene terephthalate constituent units as its main ingredient,

wherein said cocondensation polyseter is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms,

said cocondensation polyester having an intrinsic viscosity [$\eta$] of 0.5 to 1.5 dl/g and a glass transition temperature of 70°C or higher.

16. A polyester resin laminated molding comprising

a layer composed of a cocondensation polyester or

a polyester resin composition layer comprising (i) a polyalkylene terephthalate containing ethylene terephthalate constituent units as its main ingredient and (ii) a cocondensation polyester, and

a layer composed of polyalkylene terephthalate comprising ethylene terephthalate constituent units as its main ingredient,

76

wherein said cocondensation polyseter is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient,

said cocondensation polyester having an intrinsic viscosity $[\eta]$ of 0.5 to 1.5 dl/g.

17. A polyester resin stretch laminated molding comprising

a layer composed of a cocondensation polyester or

a polyseter resin composition layer comprising (i) a polyalkylene terephthalate containing ethylene terephthalate constituent units as its main ingredient and (ii) a cocondensation polyester, and

a layer composed of polyalkylene terephthalate comprising ethylene terephthalate constituent units as its main ingredient,

wherein said cocondensation polyseter is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient, and

(d) 0 to 2 mol% of polyfunctional constituent units derived from a polyfunctional compound having 3 or more carboxyl groups and/or hydroxyl groups in total and 3 to 15 carbon atoms,

said cocondensation polyester having an intrinsic viscosity $[\eta]$ of 0.5 to 1.5 dl/g and a glass transition temperature of 70° C or higher.

18. A polyester resin stretch laminated molding comprising

a layer composed of a cocondensation polyester or

a polyseter resin composition layer comprising (i) a polyalkylene terephthalate containing ethylene terephthalate constituent units as its main ingredient and (ii) a cocondensation polyester, and

a layer composed of polyalkylene terephthalate comprising ethylene terephthalate constituent units as its main ingredient,

wherein said cocondensation polyseter is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient,

said cocondensation polyester having an intrinsic viscosity $[\eta]$ of 0.5 to 1.5 dl/g.

19. A preform for the preparation of a polyester resin multi-layer blow molding comprising

a layer composed of a cocondensation polyester or

a polyseter resin composition layer comprising (i) a polyalkylene terephthalate containing ethylene terephthalate constituent units as its main ingredient and (ii) a cocondensation polyester, and

a layer composed of polyalkylene terephthalate comprising ethylene terephthalate constituent units as its main ingredient,

wherein said cocondensation polyseter is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

EP 0 394 751 A2

(c) 48 to 50 mol% of diol constituent units comprising ethylene glycol constituent units as their main ingredient, and

(d) 0 to 2 mol% of polyfunctional constituent units derived from a polyfunctional compound having 3 or more carboxyl groups and/or hydroxyl groups in total and 3 to 15 carbon atoms,

said cocondensation polyester having an intrinsic viscosity [$\eta$] of 0.5 to 1.5 dl/g and a glass transition temperature of 70°C or higher.

20. A preform for the preparation of a polyester resin multi-layer blow molding comprising

a layer composed of a cocondensation polyester or

a polyseter resin composition layer comprising (i) a polyalkylene terephthalate containing ethylene terephthalate constituent units as its main ingredient and (ii) a cocondensation polyester, and

a layer composed of polyalkylene terephthalate comprising ethylene terephthalate constituent units as its main ingredient,

wherein said cocondensation polyseter is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient,

said cocondensation polyester having an intrinsic viscosity [$\eta$] of 0.5 to 1.5 dl/g.

21. A polyester resin multi-layer blow molding comprising

a layer composed of a cocondensation polyester or

a polyseter resin composition comprising (i) a polyalkylene terephthalate containing ethylene terephthalate constituent units as its main ingredient and (ii) a cocondensation polyester, and

a layer composed of a polyalkylene terephthalate comprising ethylene terephthalate constituent units as its main ingredient,

wherein said cocondensation polyseter is substantially linear and is composed of

(a) 25 to 42 mol% of mononuclear aromatic dicarboxylic acid constituent units comprising isophthalic acid constituent units as their main ingredient,

(b) 8 to 25 mol% of binuclear aromatic dicarboxylic acid constituent units comprising 2,6-naphthalenedicarboxylic acid constituent units as their main ingredient,

(c) 48 to 50 mol% of diol constituent units comprising ethylene glycol constituent units as their main ingredient, and

(d) 0 to 2 mol% of polyfunctional constituent units derived from a polyfunctional compound having 3 or more carboxyl groups and/or hydroxyl groups in total and 3 to 15 carbon atoms,

said cocondensation polyester having an intrinsic viscosity [$\eta$] of 0.5 to 1.5 dl/g and a glass transition temperature of 70°C or higher.

22. A polyester resin multi-layer blow molding comprising

a layer composed of a cocondensation polyester or

a polyseter resin composition layer comprising (i) a polyalkylene terephthalate containing ethylene terephthalate constituent units as its main ingredient and (ii) a cocondensation polyester, and

a layer composed of polyalkylene terephthalate comprising ethylene terephthalate constituent units as its main ingredient,

wherein said cocondensation polyseter is substantially linear and is composed of

(a) 2.5 to 45 mol% of mononuclear aromatic dicarboxylic acid constituent units comprising isophthalic acid constituent units as their main ingredient,

(b) 2.5 to 25 mol% of binuclear aromatic dicarboxylic acid constituent units comprising 2,6-naphthalenedicarboxylic acid constituent units as their main ingredient ,

(c) 48 to 50 mol% of diol constituent units comprising ethylene glycol constituent units as their main ingredient,

(d) 0 to 2 mol% of polyfunctional constituent units derived from a polyfunctional compound having 3 or more carboxyl groups and/or hydroxyl groups in total and 3 to 15 carbon atoms, and

(e) 2.0 to 22.5 mol% of aliphatic dicarboxylic acid constituent units comprising succinic acid constituent units as their main ingredient,

said cocondensation polyester having an intrinsic viscosity $[\eta]$ of 0.5 to 1.5 dl/g.